# EUROPÄISCHE PATENTSCHRIFT

(11) **EP 4 219 998 B1**
(45) Veröffentlichungstag und Bekanntmachung des Hinweises auf die Patenterteilung: **24.09.2025**
(21) Anmeldenummer: 22153386.2
(22) Anmeldetag: 26.01.2022
(51) Int. Cl.: F16L 37/14

(54) **AUSLESBARE KUPPLUNGSBUCHSE SOWIE DEREN VERBINDUNGSVERFAHREN**
READABLE COUPLING SOCKET AND CONNECTION METHOD FOR SAME
DOUILLE D'ACCOUPLEMENT LISIBLE, AINSI QUE SON PROCÉDÉ DE CONNEXION

(43) Veröffentlichungstag der Anmeldung: 02.08.2023
(73) Patentinhaber: TI Automotive (Fuldabrück) GmbH, 34277 Fuldabrück (DE)
(72) Erfinder: BARTHEL, Iris, 34270 Schauenburg (DE); BUBE, Kay, 36277 Schenklengsfeld (DE); ROHDE, Reiner, 34323 Malsfeld (DE)
(74) Vertreter: Novagraaf Group

(56) Entgegenhaltungen:
- EP-A1- 3 544 114
- EP-A1- 3 936 752
- US-A1- 2005 063 125

## Beschreibung

Die Erfindung betrifft eine Kupplungsbuchse nach dem Oberbegriff des Anspruchs 1 sowie ein Verfahren zum Verbinden einer Kupplungsbuchse und eines in die Kupplungsbuchse einsteckbaren Kupplungssteckers gemäß dem Oberbegriff des Anspruchs 14**.**

US 2005/063125 A1 und EP 3 544 114 A1 offenbaren jeweils eine Kupplungsbuchse mit einem Indikator zur Indikation eines Verbindungszustandes zwischen der Kupplungsbuchse und einem Kupplungsstecker. Der Indikator ist in radialer Richtung beweglich am Buchsenkörper gelagert.

EP 3 936 752 A1 beschreibt eine Kupplungsbuchse mit einem axial beweglichen Indikator zur Indikation eines Verbindungszustandes zwischen einem Kupplungsstecker und der Kupplungsbuchse. Der Indikator umfasst an seiner Außenseite einen optisch auslesbaren Code, der beispielsweise als Barcode ausgebildet sein kann.

Bei einer aus US 7,244,142 B2 bekannten Kupplungsbuchse sind dem Rückhalter die Funktionen der Halterung und der gleichzeitigen optischen Anzeige bzw. Indikation des Verbindungszustandes zugewiesen. Der etwa U-förmige Rückhalter bzw. Indikator ist auf der Außenseite seiner U-Basis mit einer Antenne sowie einem Chip versehen, wobei die Antenne und der Chip in einem etikettartigen Element eingebracht sind. Dabei ragt ein Vorsprung des Buchsenkörpers in radialer Richtung durch eine Öffnung in der U-Basis des Rückhalters und betätigt so entsprechende Schaltkontakte des Senders.

Nachteilig an der besagten Ausführungsform aus US 7,244,142 B2 ist, dass der Chip den geänderten Zustand des Schaltkreises nicht speichert. Stattdessen bewirkt der geöffnete Schaltkreis, dass die Antenne funktionsuntüchtig ist, so dass ein Lesegerät aus der Abwesenheit eines Sendesignals schließen kann, dass der Kupplungsstecker nicht vollständig in den Buchsenkörper eingeschoben ist. Die Abwesenheit eines Sendesignals kann allerdings auch andere Gründe haben. Beispielsweise kann es leicht passieren, dass das Sendesignal aufgrund der Ausrichtung bzw. Positionierung von Kupplungsbuchse und Lesegerät zueinander nicht oder nur in zu geringem Maße vom Lesegerät erfasst wird. Das Lesegerät würde dann ein falschnegatives Signal anzeigen und der Nutzer würde fälschlicherweise davon ausgehen, dass eine fluidische Verbindung zwischen dem Kupplungsstecker und der Kupplungsbuchse nicht vorliegt. Im Ergebnis ist der Nutzer immer dann verunsichert, sobald kein Signal erfasst wird. Der Fehler kann dann in einer unzureichenden mechanischen und damit auch fluidischen Verbindung oder aber in einem ungünstig positionierten Lesegerät liegen.

Dieses Problem wird von EP 3 544 114 A1 dadurch gelöst, dass der Zustand des Schaltkreises in dem RFID-Chip gespeichert wird, so dass das Sendesignal entweder eine geöffnete oder eine geschlossene fluidische Verbindung aktiv anzeigt. Wird ein Sendesignal nicht erfasst, so liegt dies in jedem Falle am Übertragungsweg des Signals, nicht aber am geöffneten Zustand des Schaltkreises bzw. der fluidischen Verbindung. Der Rückhalter ist sowohl zur Halterung des Kupplungssteckers in dem Buchsenkörper als auch zur Indikation der vollständigen Halterung des Kupplungssteckers ausgebildet. Er vereint folglich beide Funktionen in sich, so dass der Rückhalter und der Indikator gleichermaßen und gleichzeitig radial in den Buchsenkörper einschiebbar sind. Der RFID-Chip ist zusammen mit der Antenne und den beiden Schaltkontakten auf einer Außenseite des Buchsenkörpers aufgebracht. Demgegenüber ist der Schließer an einer Innenseite des Rückhalters befestigt, so dass der Schließer bei vollständiger Einführung des Rückhalters in den Buchsenkörper die beiden Schaltkontakte kontaktiert. Dieser Kontakt wird von dem RFID-Chip detektiert, gespeichert und kann später von einem Lesegerät automatisch ausgelesen werden, so dass der Verbindungszustand nicht nur optisch an der Position des Rückhalters erkennbar, sondern auch automatisiert elektronisch erfassbar ist.

Nachteilig an der aus EP 3 544 114 A1 bekannten Kupplungsbuchse ist, dass die Anordnung der Antenne und der Schaltkontakte verhältnismäßig viel nutzbare Oberfläche in einem axial mittleren Bereich des Buchsenkörpers in Anspruch nimmt. Die Antenne und die Schaltkontakte sind auf einem Etikett befindlich, welches auf einem größeren, mittleren Abschnitt des Buchsenkörpers aufgeklebt ist. Das Etikett erfordert jedoch eine genau darauf abgestimmte, glatte Oberfläche des Buchsenkörpers, damit das Etikett keine Falten auf dem Buchsenkörper wirft. Dementsprechend bedingt das Etikett zahlreiche, konstruktive Erfordernisse, so dass sich der Buchsenkörper weniger variabel gestalten lässt. Beispielsweise profitieren Fluidkupplungssysteme vom Baukastenprinzip dergestalt, dass unterschiedliche Kupplungsabschnitte mit unterschiedlichen Verbindungsabschnitten kombiniert werden können. Die Verbindung der beiden Abschnitte liegt naturgemäß in dem mittleren axialen Bereich des Buchsenkörpers, so dass ein Konflikt zwischen dem flexiblen Baukastenprinzip einerseits und der automatisierten elektronischen Erfassung des Verbindungszustandes andererseits vorliegt.

Der Erfindung liegt daher die Aufgabe zugrunde, eine Kupplungsbuchse zu schaffen, welche gleichermaßen kompakt und flexibel herstellbar ist sowie der automatisierten elektronischen Erfassung des Verbindungszustandes gerecht wird. Vorzugsweise bietet die Kupplungsbuchse auch die Aufgabe der Bereitstellung einer optischen und/oder haptischen Anzeige des Verbindungszustandes.

Diese Aufgabe/n wird/werden gelöst durch eine Kupplungsbuchse zur automatisierten Erfassung des Kupplungs-zustandes, umfassend einen Buchsenkörper mit einem Kupplungsabschnitt und einem Verbindungsabschnitt, wobei der Kupplungsabschnitt ausgebildet ist, um mit einem komplementären Kupplungsstecker reversibel lösbar verbunden zu werden, wobei der Verbindungsabschnitt ausgebildet ist, um mit einem Rohr oder Aggregat verbunden zu werden bzw. zu sein, wobei der Kupplungsabschnitt und der Verbindungsabschnitt über einen Innenkanal fluidisch miteinander verbunden sind,
wobei die Kupplungsbuchse einen Rückhalter zum Verriegeln des Kupplungssteckers in dem Buchsenkörper umfasst, wobei der Rückhalter beweglich am Buchsenkörper gelagert ist, wobei die Kupplungsbuchse einen Indikator zur Indikation eines Verbindungszustandes zwischen der Kupplungsbuchse und dem Kupplungsstecker aufweist, wobei der Indikator beweglich am Buchsenkörper gelagert ist und über seine Position relativ zum Buchsenkörper den Verbindungszustand anzeigt,
wobei die Kupplungsbuchse einen Sender zur Übertragung eines Sendesignals aufweist, wobei der Sender so ausgebildet ist, dass das Sendesignal den Verbindungszustand übertragen kann, wobei der Sender einen Chip, eine Antenne sowie einen Schalter umfasst, wobei der Schalter wenigstens einen Schaltkontakt sowie einen Schließer aufweist, wobei der Chip, der wenigstens eine Schaltkontakt und der Schließer Bestandteile eines Schaltkreises sind,
wobei der Schaltkreis sich je nach Position des Schließers relativ zu dem wenigstens einen Schaltkontakt in einem geöffneten oder in einem geschlossenen Zustand befindet, wobei die Kupplungsbuchse so ausgebildet ist, dass bei einem Einführen des Kupplungssteckers in den Buchsenkörper der Zustand des Schaltkreises geändert wird,
der Chip und/oder die Antenne und/oder der wenigstens eine Schaltkontakt am Indikator und/oder am Rückhalter angeordnet ist/sind, dadurch gekennzeichnet, dass der Sender so ausgebildet ist, dass der geänderte Zustand im Chip speicherbar und über das Sendesignal von einem Lesegerät abrufbar ist, wobei der Indikator im nicht mit dem Kupplungsstecker verbundenen Verbindungszustand der Kupplungsbuchse axial beweglich am Buchsenkörper gelagert ist.

Es ist möglich, dass der Rückhalter und der Indikator Bestandteile eines mehrstückigen oder einstückigen, insbesonderen integral ausgebildeten Kombinationselementes sind. Vorzugsweise sind der Rückhalter und der Indikator separat voneinander ausgestaltet. Es ist insbesondere möglich, dass der Rückhalter und der Indikator wenigstens teilweise und vorzugsweise vollständig unabhängig voneinander beweglich am Buchsenkörper gelagert sind und zweckmäßigerweise nicht als Bestandteile eines Kombinationselementes zu betrachten sind.

Der Erfindung liegt zunächst die Erkenntnis zugrunde, dass der Schließer verhältnismäßig klein gegenüber dem Aggregat aus Schaltkontakten, Chip und v.a. der Antenne ist, so dass der relativ kleine Schließer auf der Oberfläche des Buchsenkörpers nur wenig Platz verbraucht. Es wurde gefunden, dass bei der Anordnung des Chips, der Antenne und/oder des wenigstens einen Schaltkontakts am Indikator und/oder am Rückhalter der Buchsenkörper bei Bedarf ohne Weiteres zweiteilig ausgestaltet werden kann. Der Erfindung liegt ferner die Erkenntnis zugrunde, dass der Indikator bzw. Rückhalter so ausgebildet werden kann, dass er die Schaltkontakte, den Chip und die Antenne aufnehmen und vorzugsweise auch schützen kann.

Insbesondere wurde gefunden, dass die Vorteile der Anordnung des Chips, der Antenne und/oder des wenigstens einen Schaltkontakts am Indikator und/oder am Rückhalter gegenüber den damit einhergehenden Nachteilen überwiegen. So bedarf die erfindungsgemäße Anordnung zwar eines größeren Indikators/Rückhalters, weil der Indikator/Rückhalter die Schaltkontakte, den Chip und die Antenne aufnimmt. Der Erfindung liegt darüber hinaus die Erkenntnis zugrunde, dass das große Volumen des Indikators/Rückhalters jedoch nicht zu einem entsprechend größeren Volumen der Kupplungsbuchse führen muss, weil im Falle des Indikators/Rückhalters vor allem die für die elektronischen Komponenten bereitgestellte Oberfläche relevant ist. Der Indikator/Rückhalter kann somit eine große Oberfläche bereitstellen ohne dabei gleichzeitig das Volumen der Kupplungsbuchse entscheidend zu vergrößern, was im Automobilbereich in aller Regel unerwünscht ist. Die erfindungsgemäße Kupplungsbuchse ist daher sowohl kompakt ausgebildet, flexibel herstellbar und bietet zudem die Möglichkeit der automatisierten und sicheren elektronischen Erfassung des Verbindungszustandes. Die eingangs genannte Aufgabe ist damit gelöst.

Der Begriff "axial" ist vorzugsweise auf Einbauteile bezogen und bezieht sich insbesondere auf die Kupplungsbuchse bzw. auf den Kupplungsstecker. Das Wort "axial" meint vorzugsweise die Mittelachsenrichtung des Kupplungsabschnitts der Kupplungsbuchse. Bezogen auf den Kupplungsstecker meint der Begriff "axial" bevorzugt die Mittelachsenrichtung des Dichtflächenabschnitts des Kupplungssteckers. Der Begriff "axial" kann auch eine Mittelachsenrichtung des Verbindungsabschnitts der Kupplungsbuchse meinen, wenn er darauf bezogen ist. Sofern die Kupplungsbuchse gewinkelt ausgestaltet ist, ist die axiale Richtung des Verbindungsabschnitts ungleich derjenigen des Kupplungsabschnitts.

Der Ausdruck "axial einwärts" meint bevorzugt die axiale Richtung ausgehend von der Kupplungsöffnung der Kupplungsbuchse in Richtung eines axialen Mittelabschnitts der Kupplungsbuchse bzw. ausgehend von einer/der Steckeröffnung des Kupplungssteckers in Richtung eines axialen Mittelabschnitts des Kupplungssteckers.

Der Begriff "radial" bezieht sich vorzugsweise auf die jeweilige axiale Richtung. In einem Längsschnitt (Mittelachse liegt bevorzugt in der Bildebene) des Bauteils ist die radiale Richtung vorzugsweise senkrecht zu der axialen Richtung ausgerichtet. Der Ausdruck "Umlaufrichtung" bezieht sich zweckmäßigerweise auf die ihm zugrunde liegende Achse bzw. axiale Richtung.

Es ist bevorzugt, dass der Verbindungsabschnitt ausgebildet ist, um mit einem Rohr verbunden zu werden. Der Verbindungsabschnitt kann insbesondere kraft- und/oder stoffschlüssig an das Rohr angeschlossen werden. Ein Kraftschluss mag beispielsweise über einen Presssitz des Rohres auf dem Verbindungsabschnitt oder in dem Verbindungsabschnitt erreicht werden. Es ist möglich, dass das Rohr mittels Schweißen mit dem Verbindungsabschnitt stoffschlüssig verbunden wird. Als Schweißmethode kommen beispielsweise Laserschweißen und Reibschweißen in Betracht. Gemäß einer sehr bevorzugten Ausführungsform ist das Rohr in den Verbindungsabschnitt eingesteckt und bevorzugt mit diesem per Laserschweißen stoffschlüssig verbunden. Es ist möglich, dass der Verbindungsabschnitt der Kupplungsbuchse integral mit einem Aggregat verbunden ist. Es ist möglich, das Aggregat bzw. einen Teil des Aggregats gemeinsam mit der Kupplungsbuchse per Spritzguss herzustellen. Das Aggregat kann beispielsweise ein Tank eine Pumpe, eine Düse oder dergleichen sein. Gemäß einer sehr bevorzugten Ausführungsform ist die Kupplungsbuchse ein separat hergestelltes Bauteil, sodass die Verbindung mit dem Rohr oder dem Aggregat vorzugsweise erst nachträglich geschaffen wird.

Der Kupplungsstecker ist vorzugsweise ein separat hergestelltes Bauteil. Es ist bevorzugt, dass der Kupplungsstecker einen Anschlussabschnitt zum Anschluss an ein Rohr oder ein Aggregat aufweist. Der Anschluss an das Rohr oder das Aggregat kann insbesondere kraft- und/oder stoffschlüssig ausgestaltet sein. Es ist möglich, dass der Kupplungsstecker integral mit dem Aggregat verbunden ist. Beispielsweise kann das Aggregat bzw. ein Teil des Aggregats gemeinsam mit den Kupplungsstecker per Spritzguss hergestellt werden. Es ist bevorzugt, dass das Rohr kraftschlüssig in den Anschlussabschnitt eingesteckt oder auf den Anschlussabschnitt aufgesteckt ist. Mit Vorteil ist das Rohr oder das Aggregat stoffschlüssig mit dem Kupplungsstecker bzw. mit dem Anschlussabschnitt - insbesondere per Schweißung - verbunden. Die Schweißung mag vorteilhafterweise per Laserschweißen oder Reibschweißen vorgenommen worden sein.

Der Begriff "Schaltkontakt" meint vorzugsweise ein elektrisch leitfähiges Element, das in einen reversiblen elektrischen Kontakt mit dem Schließer gebracht werden kann. Der Schaltkontakt bzw. die Schaltkontakte mögen jeweils als Kontaktstreifen ausgebildet sein. Vorzugsweise umfasst der Schaltkontakt wenigstens eine Kontaktstelle. Zweckmäßigerweise umfasst der Schließer wenigstens eine Kontaktstelle und vorzugsweise zwei Kontaktstellen, welche beim Schließen des Schaltkreises mit der Kontaktstelle des Schaltkontaktes bzw. den Kontaktstellen der Schaltkontakte in einen elektrischen Kontakt treten. Zweckmäßigerweise ist die Antenne mit dem Chip elektrisch verbunden.

Gemäß einer sehr bevorzugten Ausführungsform sind der Rückhalter und der Indikator separat ausgebildete Teile, welche vorzugsweise unterschiedliche Bewegungsrichtungen beim Verschieben am Buchsenkörper aufweisen. Es ist bevorzugt, dass der Rückhalter in radialer Richtung in den Buchsenkörper einschiebbar ist. Es ist bevorzugt, dass der Rückhalter in einem Längsschnitt der Kupplungsbuchse und in einem vollständig in den Buchsenkörper eingeschoben Zustand wenigstens abschnittsweise radial außerhalb des Indikators angeordnet ist. Besonders vorzugsweise ist wenigstens ein Abschnitt eines des Handhabungsabschnittes radial außerhalb des Indikators angeordnet. Der Vorteil dieser Anordnung besteht in einer besonders gut gestaltbaren Entkopplung der Bewegungsrichtungen des Rückhalters einerseits sowie des Indikators andererseits. Vorzugsweise ist der Rückhalter in seiner Grundgestalt U-förmig ausgebildet. Es ist möglich, dass der Rückhalter in seiner Grundgestalt ringförmig ausgebildet ist. Gemäß einer Ausführungsform ist der Rückhalter durch den Kupplungsstecker radial aufspreizbar. Gemäß einer Ausführungsform umfasst der Rückhalter ein Metall. Gemäß einer anderen Ausführungsform weist der Rückhalter einen Kunststoff auf. Vorzugsweise ist der Rückhalter einstückig und weiter vorzugsweise integral ausgebildet. Vorteilhafterweise weist der Rückhalter eine U-Basis bzw. einen Handhabungsabschnitt einerseits sowie zwei Rastarme andererseits auf. Gemäß einem bevorzugten Ausführungsbeispiel ist der Handhabungsabschnitt zwischen zwei Flanschen auf einer Außenseite des Buchsenkörpers gelagert. Es ist bevorzugt, dass die beiden Rastarme des Rückhalters in einem eingeschobenen Zustand des Rückhalters jeweils in einem Rastarmfenster des Buchsenkörpers befindlich sind.

Es ist von Vorteil, dass der Indikator Kunststoff umfasst. Es ist sehr bevorzugt, dass der Indikator der Spritzguss separat von dem Rückhalter hergestellt ist. Besonders vorzugsweise können der Rückhalter und der Indikator reversibel von dem Buchsenkörper entfernt werden. Der Ausdruck "reversibles Entfernen" meint vorzugsweise das zerstörungsfreie Entfernen. Es ist von Vorteil, dass der Rückhalter und/oder der Indikator reversibel an dem Buchsenkörper befestigbar sind. Es ist möglich, dass der Rückhalter und der Indikator ein mehrstückiges oder einstückiges - insbesondere integral einstückiges - Kombinationselement bilden.

Der Rückhalter ist vorzugsweise elastisch verformbar zum Verrasten an einem Riegelelement des Kupplungssteckers ausgebildet. Das Riegelelement des Kupplungssteckers kann beispielsweise eine Schulter, eine Nut oder ein - bevorzugt umlaufender - Bund sein. Es ist besonders bevorzugt, dass der Rückhalter so ausgebildet ist, dass der Rückhalter beim Einführen des Kupplungssteckers in den Buchsenkörper Rückstellenergie speichert.

Vorzugsweise ist der Rückhalter so ausgebildet, dass der Rückhalter die gespeicherte Rückstellenergie freigibt und am Riegelelement des Kupplungssteckers verrastet, wenn der Kupplungsstecker mit seinem Riegelelement den Rückhalter bzw. die Rastarme in axialer Richtung erreicht hat. Es ist sehr bevorzugt, dass der Rückhalter reversibel von dem Riegelelement bzw. den Kupplungsstecker lösbar ist. Hierdurch wird eine besonders schnelle und komfortable mechanische Verbindung von Kupplungsstecker und -buchse erreicht.

Es ist sehr von Vorteil, dass der Schließer beweglich und vorzugsweise federelastisch ausgebildet ist. Hierdurch müssen die Schaltkontakte nicht elastisch ausgebildet werden, wodurch eine etwas größere Stabilität des Schalters erzielt wird. Gemäß einer besonders bevorzugten Ausführungsform ist der Schließer als Blattfeder ausgebildet. Vorzugsweise umfasst der Schließer ein Metall. Mit Vorteil umfasst der Schließer vorzugsweise einen am Buchsenkörper befestigten Abschnitt sowie einen von dem Buchsenkörper abstehenden Abschnitt. Es ist von Vorteil, dass der vom Buchsenkörper abstehende Abschnitt des Schließers in einer Seitenansicht des Buchsenkörpers schräg zur Mittelachse des Kupplungsabschnittes ausgerichtet ist. Es ist sehr bevorzugt, dass der vom Buchsenkörper abstehende Abschnitt wenigstens abschnittsweise in einer Seitenansicht des Buchsenkörpers in axial einwärtiger Richtung schräg nach radial außen verläuft.

Vorzugsweise ist der Indikator bzw. ist der Buchsenkörper so ausgebildet, dass der Indikator wenigstens eine axial auswärtige Position und eine axial einwärtige Positionen einnehmen kann. Es ist ganz besonders bevorzugt, dass die Kupplungsbuchse so ausgebildet ist, dass durch eine Überführung des Indikators von der axial auswärtigen Position in die axial einwärtige Position der Zustand des Schaltkreises - vorzugsweise reversibel - geändert wird. Bevorzugtermaßen ist die Kupplungsbuchse so ausgebildet, dass bei einem Überführen des Indikators von der axial einwärtigen Position in die axial auswärtige Position der Zustand des Schaltkreises geändert wird. Es ist ganz besonders bevorzugt, dass die Kupplungsbuchse so ausgebildet ist, dass der Indikator bei einer Überführung von der axial auswärtigen Position in die axial einwärtige Position den Schaltkreis öffnet.

Es ist von Vorteil, dass die Kupplungsbuchse so ausgebildet ist, dass eine/die axial auswärtige Position und/oder eine/die axial einwärtige Position durch wenigstens ein Positionselement des Buchsenkörpers und/oder durch wenigstens einen Positionsteil des Indikators definiert ist/werden. Es ist sehr bevorzugt, dass die axial auswärtige Position und/oder die axial einwärtige Position des Indikators mittels Verrasten des Positionsteils des Indikators am Positionselement des Buchsenkörpers definiert ist/sind. Vorteilhafterweise springt das wenigstens eine Positionsteil des Indikators nach radial innen vor. Das wenigstens eine Positionsteil mag in wenigstens ein Positionselement des Buchsenkörpers eingreifen und vorzugsweise darin verrasten. Vorzugsweise ist der axial auswärtigen Position und/oder der axial einwärtigen Position jeweils ein Positionselement am Buchsenkörper zugeordnet. Es ist bevorzugt, dass der Indikator zwei Positionsteile aufweist, welchen in der axial auswärtigen Position und/oder in der axial einwärtigen Position jeweils ein Positionselement auf dem Buchsenkörper zugeordnet ist. Es ist bevorzugt, dass das Positionselement bzw. die Positionselemente komplementär zu dem Positionsteil bzw. den Positionsteilen ausgestaltet sind. Gemäß einer bevorzugten Ausführungsform ist das Positionselement/sind die Positionselemente als zu dem/den vorspringenden Positionsteil bzw. Positionsteilen komplementäre Ausnehmungen ausgestaltet.

Gemäß einer vorzugsweisen Ausgestaltung ist/sind der wenigstens eine Schaltkontakt und/oder der Chip und/oder die Antenne auf einer dem Buchsenkörper zugewandten Seite des Indikators bzw. Rückhalters angeordnet bzw. befestigt. Hierdurch wird erreicht, dass der Sender besser von der Umgebung der Kupplungsbuchse geschützt ist. Ein weiterer Vorteil dieser Anordnung besteht darin, dass die am Indikator befestigten Elemente des Senders leicht, beispielsweise durch Kleben, am Indikator befestigbar sind. Wären beispielsweise Teile des Senders auf einer Außenseite des Indikators angeordnet, so müssten wenigstens die Schaltkontakte in radialer Richtung durch den Indikator hindurch greifen, um einen vorzugsweise am Buchsenkörper befestigten Schließer zu kontaktieren. Demzufolge müssten die Schaltkontakte bereits während des Spritzgussvorgangs in den Indikator eingebettet werden, was ein aufwändiges Vorhaben wäre. Es ist sehr bevorzugt, dass der wenigstens eine Schaltkontakt und/oder der Chip und/oder die Antenne in einem montierten Zustand des Indikators auf dem Buchsenkörper in einer Draufsicht und/oder in einer Seitenansicht auf den Indikator bzw. die Kupplungsbuchse nicht sichtbar ist/sind.

Gemäß einer bevorzugten Ausführungsform ist der Indikator zu einem überwiegenden Teil auf einer Außenseite des Buchsenkörpers angeordnet. Dies erlaubt es, dass der Indikator auch per Hand betätigt werden kann. Es ist ganz besonders bevorzugt, dass die Kupplungsbuchse so ausgebildet ist, dass der Indikator mit bloßem Auge von außen sichtbar ist und vorzugsweise eine andere Farbe als der Buchsenkörper aufweist. Gemäß einer bevorzugten Ausgestaltung umschließt der Indikator den Buchsenkörper axial abschnittsweise in einer Umlaufrichtung teilweise und vorzugsweise lediglich teilweise. Es ist möglich, dass der Indikator den Buchsenkörper in Umlaufrichtung um höchstens 270°, bzw. 225° bzw. 180° umschließt. Es istvon Vorteil, dass eine axiale Ausdehnung des Indikators höchstens 3/4 bzw. 2/3 bzw. der Hälfte der axialen Ausdehnung des Buchsenkörpers entspricht.

Es ist bevorzugt, dass der Indikator wenigstens zwei und vorzugsweise wenigstens drei definierte Positionen relativ zum Buchsenkörper einnehmen kann. Die Positionen können per jeweiligem Anschlag oder Pressfixierung und insbesondere mittels Rastpunkten definiert sein. Es ist sehr bevorzugt, dass der Indikator relativ zum Buchsenkörper eine/die axial auswärtige Position und eine/die axial einwärtige Position einnehmen kann. Vorzugsweise kann der Indikator relativ zum Buchsenkörper eine mittlere Position einnehmen, welche zwischen der axial auswärtigen Position und der axial einwärtige Position befindlich ist. Mit Vorteil ist die Kupplungsbuchse so ausgebildet, dass der Zustand des Schaltkreises von einer Überführung aus der axial auswärtigen Position in die mittlere Position geändert wird. Es ist bevorzugt, dass die Kupplungsbuchse so ausgebildet ist, dass der Zustand des Schaltkreises von der mittleren Position in die axial einwärtige Position nicht geändert wird.

Es ist besonders vorteilhaft, dass die Kupplungsbuchse so ausgebildet ist, dass der Kupplungsstecker bei einem Einführen in den Buchsenkörper den Indikator von einer/der axial auswärtigen Position in die axial einwärtige bzw. mittlere Position überführt. Es ist möglich, dass die Kupplungsbuchse so ausgebildet ist, dass der Kupplungsstecker den Indikator nicht von der mittleren Position in eine/die axial einwärtige Position überführen kann. Vorteilhafterweise ist die Kupplungsbuchse so ausgestaltet, dass der Indikator manuell bzw. von Hand von der axial auswärtigen bzw. mittleren Position in die axial einwärtige Position überführbar und insbesondere reversibel überführbar ist.

Das Vorsehen von drei definierten Positionen hat den Vorteil, dass die vollständige Einführung des Kupplungssteckers auch haptisch überprüfbar ist. So kann ein Nutzer vor Einführung des Kupplungssteckers, insbesondere per Betätigung durch die Hand, haptisch erfahren, dass der Indikator sich reversibel in alle drei definierten Positionen verschieben lässt. Wird nun der Kupplungsstecker in den Buchsenkörper eingeführt, so wird der Indikator von der axial auswärtigen Position in die mittlere Position überführt, während gleichzeitig der Kupplungsstecker in dem Buchsenkörper verrastet. In dem verrasteten Zustand des Kupplungssteckers kann dann der Indikator zwar von der mittleren Position in die axial einwärtige Position und zurück verschoben werden. Allerdings ist es aufgrund der Verrastung des Kupplungssteckers in dem Buchsenkörper mithilfe des Rückhalters nicht mehr möglich, den Indikator von der mittleren Position in die axial auswärtige Position zu verschieben. Somit ist eine Überprüfung des Verbindungszustandes zwischen Kupplungsstecker und Kupplungsbuchse haptisch über ein manuelles Verschieben des Indikators nachvollziehbar. Es ist bevorzugt, dass der Schaltkreis sich in der mittleren Position in einem geöffneten Zustand befindet, sodass vorzugsweise der Zustand des Schaltkreises von der Überführung aus der mittleren Position in die axial einwärtige Position nicht geändert wird. Vorzugsweise werden die drei definierten Positionen über wenigstens drei Positionselemente am Buchsenkörper definiert, welche in Eingriff mit wenigstens einem Positionsteil am Indikator gebracht werden. Mit Vorteil ist der Eingriff des wenigstens einen Positionsteils in den drei Positionselementen als Rasteingriff ausgestaltet.

Gemäß einer bevorzugten Ausführungsform weist der Buchsenkörper wenigstens ein Führungsteil und vorzugsweise zwei Führungsteile zur Führung des Indikators auf. Mit Vorteil umfasst der Indikator wenigstens ein Führungselement und vorzugsweise zwei Führungselemente. Zweckmäßigerweise steht das wenigstens eine Führungselement des Indikators derart in Eingriff mit dem wenigstens einen Führungsteil das Buchsenkörpers, dass hierdurch eine - bevorzugt axiale - Bewegungsrichtung des Indikators auf dem Buchsenkörper definiert wird. Es ist möglich, dass das Führungselement des Indikators und das Führungsteil das Buchsenkörpers eine axiale Ausdehnung des Verfahrweges des Indikators bestimmen. Mit Vorteil ist das wenigstens eine Führungsteil des Buchsenkörpers oder das wenigstens eine Führungselement des Indikators als Nut ausgebildet, dessen Längsausdehnung sich in axialer Richtung erstreckt, während das jeweils andere Element als in die Nut eingreifende Nase ausgebildet ist.

Nach einer besonders empfohlenen Ausführungsform umfasst der Indikator einen Betätigungsabschnitt, wobei die Kupplungsbuchse bzw. der Indikator vorzugsweise so ausgebildet ist/sind, dass der Kupplungsstecker beim Einführen in den Buchsenkörper den Betätigungsabschnitt berührt. Diese Anordnung hat den Vorteil, dass die Übermittlung der Information des Verbindungszustandes direkt von dem Kupplungsstecker auf den Indikator übertragen wird, sodass der Indikator verhältnismäßig einfach und gleichzeitig robust ausgestaltet werden kann. Vorteilhaft ist an dieser Ausgestaltung ferner, dass die Überführung des Kupplungssteckers in den Verbindungszustand gleichzeitig mit einer Überführung des Indikators sowie einer Änderung des Zustands des Schaltkreises einhergeht, wodurch eine separate Betätigung des Indikators entfällt. So kann mit einer einzigen Verbindungsbewegung zwischen Kupplungsstecker und Kupplungsbuchse die gesamte Kupplungsanordnung in einen betriebsbereiten Zustand versetzt werden, welcher gleichzeitig elektronisch auslesbar sowie optisch und haptisch überprüfbar ist. Besonders vorzugsweise ist die Kupplungsbuchse so ausgebildet, dass der Kupplungsstecker beim Einführen in den Buchsenkörper den Indikator über axial abschnittsweise mitnimmt. Gemäß einer Ausführungsform ist der Betätigungsabschnitt des Indikators eine radial nach innen ragenden Nase.

Es ist ganz besonders bevorzugt, dass der Kupplungsstecker ein Betätigungselement aufweist, welches beim Einführen des Kupplungssteckers in den Buchsenkörper mit dem Betätigungsabschnitt des Indikators in Kontakt tritt. Es ist von Vorteil, dass die Kupplungsbuchse so ausgebildet ist, dass beim Einführen des Kupplungssteckers das Betätigungselement des Kupplungssteckers den Indikator aus der axial auswärtigen Position in die mittlere Position bzw. in die axial einwärtige Position verschiebt. Vorzugsweise ist das Betätigungselement des Kupplungssteckers ein radial gegenüber einer Dichtfläche nach außen vorstehender Vorsprung. Bei dem Betätigungselement kann es sich gemäß einer Ausführungsform um eine Stirnfläche eines Sicherungsteils eines Kupplungssteckers handeln. Bevorzugtermaßen dient das Sicherungsteil des Kupplungssteckers einer Verdrehsicherung des Kupplungssteckers in dem Buchsenkörper. Es ist möglich, dass das Betätigungselement des Kupplungssteckers einer Stirnfläche eines/des umlaufenden Bundes des Kupplungssteckers entspricht. Das Betätigungselement kann ferner eine Nut des Kupplungssteckers sein, in welche der Betätigungsabschnitt des Indikators eingreift.

Besonders vorzugsweise umfasst der Buchsenkörper eine Betätigungsausnehmung - insbesondere in Form einer radial durchgehenden Nut oder eines Fensters, - sodass bevorzugtermaßen der Kupplungsstecker bzw. das Betätigungselement beim vollständigen Einführen in den Buchsenkörper den Indikator bzw. den Betätigungsabschnitt berührt bzw. mitnimmt. Der Ausdruck "Fenster" meint insbesondere einen von der Wand des Buchsenkörper gebildeten, umlaufenden Rand der Betätigungsausnehmung in einer Draufsicht auf den Buchsenkörper. Das Wort "Nut" meint vorzugsweise, dass die Betätigungsausnehmung im Bereich einer/der Kupplungsöffnung des Buchsenkörpers offen ist, sodass die Betätigungsausnehmung in Form einer Nut in der Draufsicht auf den Buchsenkörper einen etwa U-förmigen Umriss aufweist. Zweckmäßigerweise ist die Betätigungsausnehmung so ausgebildet, dass der Betätigungsabschnitt des Indikators durch die Wand des Buchsenkörpers hindurch greifen kann, um mit dem Kupplungsstecker bzw. dem Betätigungselement des Kupplungssteckers in Kontakt zu treten. Zweckmäßigerweise entspricht die Ausdehnung der Betätigungsausnehmung in Umlaufrichtung wenigstens der Ausdehnung des Betätigungsabschnittes in Umlaufrichtung. Es ist bevorzugt, dass eine axiale Ausdehnung der Betätigungsausnehmung wenigstens dem Verfahrweg des Betätigungsabschnittes des Indikators zwischen der axial auswärtigen Position und der axial einwärtigen Position entspricht.

Gemäß einer möglichen Ausführungsform ist die Kupplungsbuchse so ausgebildet, dass bei einem vollständig in den Buchsenkörper eingeführten Kupplungsstecker der Schaltkreis getrennt ist. Hierdurch wird erreicht, dass die Antenne und/oder der Chip in einer axial einwärtigen Hälfte des Indikators angeordnet werden kann/können. Zweckmäßigerweise ist somit wenigstens eine Kontaktstelle des Schließers - vorzugsweise in der axial auswärtigen Position und/oder der axial einwärtigen Position und/oder der mittleren Position zwischen einer nach axial auswärts gewandten Stirnfläche des Betätigungsabschnittes und der Antenne angeordnet. Hierdurch ist die Antenne weitestmöglich von dem Rückhalter entfernt, welcher auch ein Metall umfassen kann. Im Ergebnis wird durch diese Anordnung erreicht, dass weniger Störfelder des metallenen Rückhalters das Sendesignal der Antenne stören. Es ist bevorzugt, dass die Antenne in einem axial einwärtigen Drittels bzw. in der axial einwärtigen Hälfte des Indikators angeordnet ist. Vorzugsweise ist/sind der Chip und/oder die Antenne axial einwärts bezüglich des wenigstens einen Schaltkontaktes am Indikator angeordnet. Es ist von Vorteil, dass die Kupplungsbuchse so ausgebildet ist, dass der Indikator zwei und weiter vorzugsweise genau zwei definierte axiale Positionen einnehmen kann.

Es ist möglich, dass die Kupplungsbuchse so ausgestaltet ist, dass bei einem vollständig in den Buchsenkörper eingeführten Kupplungsstecker der Schaltkreis geschlossen ist. Hierdurch wird erreicht, dass der Normalzustand des Schaltkreises geschlossen ist, sodass der wenigstens eine Schaltkontakt und der Schließer im Normalzustand einander berühren, wodurch Korrosionseinflüsse verringert werden. Vorteilhafterweise ist/sind der Chip und/oder die Antenne bezüglich des wenigstens einen Schaltkontaktes axial auswärtig am Indikator angeordnet. Vorzugsweise ist die Kupplungsbuchse so ausgebildet, dass der Indikator wenigstens drei definierte Positionen relativ zum Buchsenkörper einnehmen kann.

Es ist bevorzugt, dass der Buchsenkörper wenigstens ein Sicherungselement zur Verdrehsicherung des Kupplungssteckers in dem Buchsenkörper aufweist. Vorteilhafterweise entspricht der Buchsenkörper der VDA-Richtlinie und weist beispielsweise eine Nennweite NW (Innendurchmesser des Kupplungssteckers) von 8, 12, 16, 20, 26, 32, 40 oder 50 mm auf. Mit Vorteil entspricht das wenigstens ein Sicherungselement einer nutartigen Vertiefung auf einer Innenseite des Buchsenkörpers im Bereich des Kupplungsabschnittes.

Zweckmäßigerweise ist das Sicherungselement derart in axialer Richtung ausgedehnt, dass ein komplementäres, federartiges Sicherungsteil des Kupplungssteckers beim Einführen des Kupplungssteckers in dem Buchsenkörper in das Sicherungselement eingreift. Zweckmäßigerweise gehen das Sicherungsteil des Kupplungssteckers und das Sicherungselement des Buchsenkörpers eine Nut-Feder-Verbindung ein. Es ist bevorzugt, dass der Buchsenkörper zwei Sicherungselemente umfasst. Vorzugsweise sind die zwei Sicherungselemente bezüglich der Mittelachse des Kupplungsabschnittes einander diametral gegenüberliegend angeordnet. Zweckmäßigerweise befindet sich das Sicherungselement bzw. befinden sich die Sicherungselemente in dem Kupplungsabschnitt des Buchsenkörpers. Gemäß einer bevorzugten Ausführungsform geht die Betätigungsausnehmung in axial auswärtiger Richtung in das Sicherungselement über. Im Falle einer VDA-Ausführungsform ist es bevorzugt, dass die Betätigungsausnehmung sowohl die Funktion des Sicherungselementes übernimmt als auch die Funktion der Betätigung des Indikators ermöglicht.

Gemäß einer bevorzugten Ausführungsform umfasst der Schalter zwei Schaltkontakte. Vorzugsweise ist jedem der beiden Schaltkontakte eine Kontaktstelle zugeordnet. Zweckmäßigerweise ist die Kupplungsbuchse so ausgebildet, dass der Schließer in einem geschlossenen Zustand des Schaltkreises beide Schaltkontakte bzw. Kontaktstellen kontaktiert und hierdurch vorzugsweise die beiden Schaltkontakte kurzschließt. Zweckmäßigerweise weist der Schließer zwei Kontaktstellen auf, wobei jede dieser beiden Kontaktstellen zweckmäßigerweise jeweils eine Kontaktstelle von einem der beiden Schaltkontakte kontaktiert. Der Schließer kann am Buchsenkörper oder am Indikator bzw. Rückhalter angeordnet sein. Falls der Schließer am Indikator/Rückhalter angeordnet ist, umfasst der Buchsenkörper ein Drückelement zum Drücken des Schließers in Richtung eines Schaltkontaktes zum Zweck der Kontaktierung. Falls der Schließer am Buchsenkörper befindlich ist, ist der Indikator vorzugsweise so ausgebildet, dass bei einer Überführung des Kupplungssteckers in den Verbindungszustand der Schließer beide Schaltkontakte vorzugsweise gleichzeitig berührt. Es ist bevorzugt, dass die zwei Schaltkontakte jeweils als längliche Kontaktstreifen, insbesondere als gleich lange Kontaktstreifen, ausgestaltet sind.

Es ist von Vorteil, dass der Indikator in wenigstens einer axialen Position und vorzugsweise in allen axialen Positionen den Schließer wenigstens teilweise und bevorzugt vollständig verdeckt. Dies bewirkt den Schutz des Schaltkreises. Gemäß einer möglichen Ausgestaltung ist der Schließer an dem Buchsenkörper angeordnet bzw. befestigt. Zweckmäßigerweise umfasst der Schließer einen Befestigungsabschnitt zur Befestigung des Schließers an dem Buchsenkörper und einen Kontaktierungsabschnitt zur Kontaktierung des Schaltkontaktes bzw. der Schaltkontakte. Es ist bevorzugt, dass der Buchsenkörper eine Schließeraufnahme zur Aufnahme des Schließers umfasst. Die Schließeraufnahme ist mit Vorteil als Nut auf einer Außenseite des Buchsenkörpers ausgestaltet. Vorzugsweise bedeckt der Indikator in einem montierten Zustand auf dem Buchsenkörper die Schließeraufnahmen wenigstens abschnittsweise in der axial auswärtigen Position und/oder der axial einwärtigen Position und/oder der mittleren Position des Indikators. Es ist sehr empfohlen, dass der Schließer in keiner Position des Indikators auf dem Buchsenkörper sichtbar ist. Mit Vorteil kontaktiert der Schließer den Schaltkontakt bzw. die Schaltkontakte, welcher/welche auf einer Innenseite des Indikators angeordnet sind. Es ist möglich, dass der Befestigungsabschnitt des Schließers in der Schließeraufnahme eingeklemmt oder eingegossen ist. Es ist bevorzugt, dass der Kontaktierungsabschnitt des Schließers in einer Seitenansicht des Buchsenkörpers bzw. in einem Längsschnitt des Buchsenkörpers schräg zur Mittelachse des Kupplungsabschnittes ausgerichtet ist. Mit Vorteil erstreckt sich der Kontaktierungsabschnitt im Längsschnitt des Buchsenkörpers schräg zur Mittelachse des Kupplungsabschnittes und in axial einwärtiger Richtung nach radial außen.

Die eingangs genannte Aufgabe bzw. Aufgaben werden gelöst durch eine Kupplungsanordnung umfassend eine Kupplungsbuchse - insbesondere eine erfindungsgemäße Kupplungsbuchse - und einen in die Kupplungsbuchse einsteckbaren Kupplungsstecker, wobei die Kupplungsbuchse einen Buchsenkörper mit einem Kupplungsabschnitt und einem Verbindungsabschnitt umfasst, wobei die Kupplungsbuchse ausgebildet ist, um mit dem Kupplungsstecker reversibel lösbar verbunden zu werden, wobei der Verbindungsabschnitt ausgebildet ist, um mit einem Rohr oder Aggregat verbunden zu werden oder verbunden zu sein, wobei der Kupplungsabschnitt und der Verbindungsabschnitt über einen Innenkanal fluidisch miteinander verbunden sind,
wobei die Kupplungsbuchse einen Rückhalter zum Verriegeln des Kupplungssteckers in dem Buchsenkörper umfasst, wobei der Rückhalter beweglich am Buchsenkörper gelagert ist, wobei die Kupplungsbuchse einen Indikator zur Indikation eines Verbindungszustandes zwischen dem Kupplungsstecker und der Kupplungsbuchse aufweist, wobei der Indikator beweglich am Buchsenkörper gelagert ist und über seine Position relativ zum Buchsenkörper den Verbindungszustand anzeigt, wobei der Indikator an einer Außenseite des Buchsenkörpers angeordnet ist,
wobei die Kupplungsbuchse und der Kupplungsstecker so ausgebildet sind, dass beim Einführen des Kupplungssteckers in den Buchsenkörper ein Betätigungs-element des Kupplungssteckers an einem Betätigungsabschnitt des Indikators anschlägt, so dass der Indikator bei einem weiteren Einführen des Kupplungssteckers nach axial einwärts relativ zum Buchsenkörper verschoben wird.

Es wird empfohlen, dass der Kupplungsstecker ein Riegelelement aufweist, wobei das Riegelelement vorzugsweise ausgebildet ist, beim Einführen des Kupplungssteckers in den Buchsenkörper mit dem Rückhalter zu verrasten. Mit Vorteil umfasst der Kupplungsstecker eine Dichtfläche aufweist, wobei die Dichtfläche bevorzugt axial auswärts vom Riegelelement befindlich ist. Vorteilhafterweise tritt die Dichtfläche bei Einführen des Kupplungssteckers in den Buchsenkörper in einen fluiddichten Kontakt mit einer/der Dichtung ein. Zweckmäßigerweise steht das Betätigungselement radial gegenüber der Dichtfläche vor. Der Kupplungsstecker kann einen konischen Abschnitt aufweisen, welcher mit Vorteil zwischen dem Riegelelement und der Dichtfläche befindlich ist. Der konische Abschnitt ist vorzugsweise so ausgebildet, dass er bei einer Einführung des Kupplungssteckers in den Buchsenkörper den Rückhalter bzw. die Rastarme des Rückhalters aufspreizt. Der Kupplungsstecker entspricht vorzugsweise der VDA-Richtlinie für Fluidkupplungen.

Mit Vorteil umfasst der Kupplungsstecker einen Anschlussabschnitt, wobei das Riegelelement vorzugsweise zwischen der Dichtfläche und dem Anschlussabschnitt angeordnet ist. Es ist bevorzugt, dass der Kupplungsstecker einen Mittelabschnitt umfasst. Der Mittelabschnitt ist zweckmäßigerweise zwischen dem Anschlussabschnitt und der Dichtfläche befindlich und umfasst mit Vorteil das Riegelelement. Es ist bevorzugt, dass die Dichtfläche des Kupplungssteckers wenigstens abstandsweise zylindrisch ausgebildet ist.

Zweckmäßigerweise umfasst die Kupplungsbuchse eine Dichtung zur fluiddichten Verbindung mit dem Kupplungsstecker. Mit Vorteil weist die Dichtung einen elastisch ausgebildeten Dichtungsring und vorzugsweise einen Dichtungshalter auf. Vorteilhafterweise fixiert der Dichtungshalter den Dichtungsring in dem Buchsenkörper der gestalt, dass der Dichtungsring nicht in axial auswärtiger Richtung aus dem Buchsenkörper herausfallen kann. Der Dichtungshalter mag beispielsweise ringförmig ausgestaltet sein und kann mit Vorteil in dem Buchsenkörper eingerastet sein. Es ist bevorzugt, dass die Dichtfläche des Kupplungssteckers komplementär zur Dichtung bzw. zum Dichtungsring ausgebildet ist. Zweckmäßigerweise erzeugt der Dichtungsring in Verbindung mit der Dichtfläche des Kupplungssteckers einen Kraftschluss zur fluiddichten Abdichtung der Kupplungsanordnung.

Die eingangs genannte Aufgabe/Aufgaben wird/werden gelöst durch die Verwendung der erfindungsgemäßen Kupplungsbuchse bzw. der erfindungsgemäßen Kupplungsanordnung in einem Kraftfahrzeug.

Die eingangs genannte Aufgabe/Aufgaben wird/werden gelöst durch ein Verfahren zum Verbinden einer Kupplungsbuchse - insbesondere einer erfindungsgemäßen Kupplungsbuchse - und eines in die Kupplungsbuchse einsteckbaren Kupplungssteckers, wobei die Kupplungsbuchse einen Buchsenkörper mit einem Kupplungsabschnitt und einem Verbindungsabschnitt umfasst, wobei der Kupplungsabschnitt ausgebildet ist, um mit dem Kupplungsstecker reversibel lösbar verbunden zu werden, wobei der Verbindungsabschnitt ausgebildet ist, um mit einem Rohr oder Aggregat verbunden zu werden oder verbunden zu sein, wobei der Kupplungsabschnitt und der Verbindungsabschnitt über einen Innenkanal fluidisch miteinander verbunden sind,
wobei die Kupplungsbuchse einen Rückhalter zum Verriegeln des Kupplungssteckers in dem Buchsenkörper umfasst, wobei der Rückhalter beweglich am Buchsenkörper gelagert ist, wobei die Kupplungsbuchse einen Indikator zur Indikation eines Verbindungszustandes zwischen dem Kupplungsstecker und der Kupplungsbuchse aufweist, wobei der Indikator beweglich am Buchsenkörper gelagert ist und über seine Position relativ zum Buchsenkörper den Verbindungszustand anzeigt, wobei der Indikator an einer Außenseite des Buchsenkörpers angeordnet ist,
wobei die Kupplungsbuchse einen Sender zur Übertragung eines Sendesignals aufweist, wobei der Sender so ausgebildet ist, dass das Sendesignal den Verbindungszustand übertragen kann, wobei der Sender einen Chip, eine Antenne sowie einen Schalter umfasst, wobei der Schalter wenigstens einen Schaltkontakt sowie einen Schließer aufweist, wobei der Chip, der wenigstens eine Schaltkontakt und der Schließer Bestandteile eines Schaltkreises sind,
wobei der Schaltkreis sich je nach Position des Schließers relativ zu dem wenigstens einen Schaltkontakt in einem geöffneten oder in einem geschlossenen Zustand befindet, wobei die Kupplungsbuchse so ausgebildet ist, dass bei einem Einführen des Kupplungssteckers in den Buchsenkörper der Zustand des Schaltkreises geändert wird,
dadurch gekennzeichnet, dass
der Sender so ausgebildet ist, dass der geänderte Zustand im Chip speicherbar und über das Sendesignal von einem Lesegerät abrufbar ist, wobei die Kupplungsbuchse und der Kupplungsstecker so ausgebildet sind, dass beim Einführen des Kupplungssteckers in den Buchsenkörper das Betätigungselement des Kupplungssteckers an einem Betätigungsabschnitt des Indikators anschlägt, so dass der Indikator bei einem weiteren Einführen des Kupplungssteckers nach axial einwärts relativ zum Buchsenkörper verschoben wird.

Die Erfindung ist anhand eines Ausführungsbeispiels in den nachfolgenden Figuren dargestellt. Es zeigen
- Fig. 1: eine perspektivische Ansicht einer erfindungsgemäßen Kupplungsanordnung mit einer Kupplungsbuchse und einem Kupplungsstecker in einem vollständig verbundenen Zustand,
- Fig. 2: eine perspektivische Ansicht der Kupplungsbuchse aus Fig. 1, jedoch ohne Indikator,
- Fig. 3: eine perspektivische Ansicht des Kupplungssteckers aus Fig. 1,
- Fig. 4A: eine perspektivische Außenansicht des Indikators aus Fig. 1,
- Fig. 4B: eine Ansicht der Innenseite des Indikators aus Fig. 4A,
- Fig. 5: einen Längsschnitt durch die Kupplungsanordnung aus Fig. 1, wobei allerdings der Kupplungsstecker noch nicht mit der Kupplungsbuchse verrastet ist,
- Fig. 6: einen Längsschnitt der Kupplungsanordnung aus Fig. 5 in einem nun verrasteten Zustand und
- Fig. 7: den verrasteten Zustand der Kupplungsanordnung aus Fig. 6, wobei der Indikator in einer dritten, weiter axial einwärts befindlichen Position gezeigt ist.

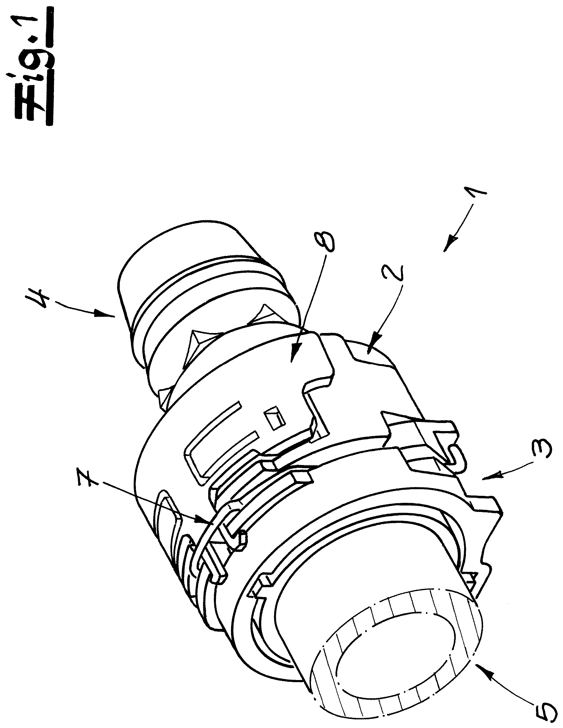

In Fig. 1 ist eine erfindungsgemäße Kupplungsanordnung 1, 5 gezeigt, welche eine Kupplungsbuchse 1 sowie einen Kupplungsstecker 5 umfasst. Der Kupplungsstecker 5 ist in dieser Figur und in nachfolgenden Figuren nur unvollständig dargestellt. Insbesondere fehlt ein weiter axial einwärts befindliches Ende des Kupplungssteckers mit einer Aufnahme für ein Fluidrohr. Die Aufnahme mag beispielsweise so ausgestaltet sein, dass das Fluidrohr in die Aufnahme des Kupplungssteckers einführbar und dort mittels Schweißen, insbesondere mittels Laserschweißen, mit dem Kupplungsstecker 5 verbindbar ist. Stattdessen ist in den Figuren 1, 3 sowie 5 bis 7 stets ein Kupplungsstecker 5 gezeigt, welcher in axial einwärtiger Richtung und damit am linken Ende der Einfachheit halber abgeschnitten dargestellt ist.

Die Kupplungsbuchse 1 nach Fig. 1 umfasst erfindungsgemäß einen Buchsenkörper 2, einen Rückhalter 7 sowie einen Indikator 8. In diesem Ausführungsbeispiel sind der Rückhalter 7 und der Indikator 8 als separate Elemente ausgebildet. Es ist möglich, dass der Rückhalter 7 als etwa U-förmiger Drahtbügel ausgebildet ist. Die Kupplungsbuchse 1 ist bevorzugt als VDA-Buchse gestaltet, wobei allerdings auch hier nicht abgebildete SAE-Ausführungsformen von der Erfindung umfasst sind. Der Buchsenkörper 2 weist gemäß Fig. 1 einen Kupplungsabschnitt 3 sowie einen Verbindungsabschnitt 4 auf. Der Kupplungsabschnitt 3 ist dazu ausgebildet, um mit dem Kupplungsstecker 5 reversibel lösbar verbunden zu werden. Der Verbindungsabschnitt 4 ist dazu ausgebildet, um mit einem hier nicht dargestellten Rohr oder Aggregat verbunden zu werden.

Es ist auch möglich, dass der Verbindungsabschnitt 4 eine einstückige bzw. integrale Verbindung mit einem Rohr oder Aggregat bildet. Folglich kann der Verbindungsabschnitt 4 auch als nur zerstörend lösbare Verbindung ausgebildet sein, welche hier jedoch nicht dargestellt wird. Auch der Kupplungsstecker 5 kann mit einem hier nicht abgebildeten Aggregat verbunden und wenigstens mit einem Abschnitt dieses Aggregats gemeinsam in einem Spritzguss hergestellt worden sein. Typische Anwendungsgebiete der erfindungsgemäßen Kupplungsanordnungen 1, 5 finden sich insbesondere in fluidfördernden Systemen innerhalb von Kraftfahrzeugen.

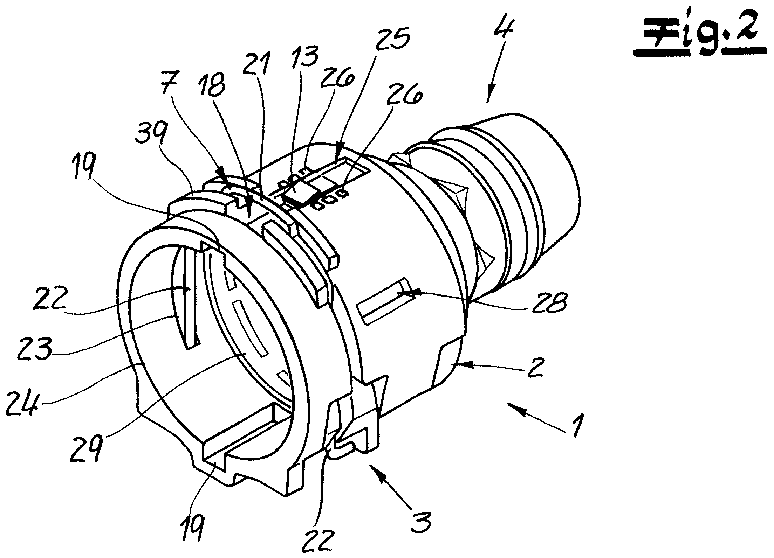

Die Darstellung der Kupplungsbuchse 1 ohne den Indikator 8 erlaubt in Fig. 2 den Blick auf eine Oberseite des Buchsenkörpers 2. Vorzugsweise findet sich in einer Schließeraufnahme 25 des Buchsenkörpers 2 ein Schließer 13. Der Schließer 13 dieses Ausführungsbeispiels ist aus Metall gefertigt und bevorzugt als Blattfeder gestaltet. Die Blattfeder umfasst vorzugsweise einen in die Schließeraufnahme 25 eingesetzten Abschnitt sowie einen dazu abgewinkelten und nach oben ragenden Abschnitt. In einem Längsschnitt des Buchsenkörpers 2 steigt der abgewinkelte Schenkel des Schließers 13 vorteilhafterweise in axial einwärtiger Richtung schräg nach oben an.

Es ist bevorzugt, dass der Buchsenkörper 2 wenigstens zwei und vorzugsweise wenigstens drei Positionselemente 26, beispielsweise in Form von Rastmulden, aufweist. Die Positionselemente sind zweckmäßigerweise in axialer Richtung hintereinander angeordnet und bevorzugt auf einer Außenseite des Buchsenkörpers 2 befindlich. Es ist möglich, dass auf dem Buchsenkörper 2 jedem der Positionselemente 26 ein weiteres, zugehöriges Positionselement 26 auf der gleichen axialen Höhe zugeordnet ist. Vorteilhafterweise sind einige der Positionselemente 26 in einer Draufsicht auf dem Buchsenkörper 2 auf einer Seite des Schließers 13 angeordnet, wohingegen die weiteren Positionselemente 26 auf der anderen Seite des Schließers 13 befindlich sind.

Es ist von Vorteil, dass der Buchsenkörper wenigstens ein Führungsteil 28 zur Führung des Indikators 8 aufweist. Zweckmäßigerweise umfasst der Buchsenkörper 2 wenigstens zwei Führungsteile 28, welche mit Vorteil in einer Draufsicht symmetrisch bezüglich einer Längsachse des Kupplungsabschnitts 3 angeordnet sind. Das wenigstens eine Führungsteil 28 kann beispielsweise als Vertiefung oder als Vorsprung ausgebildet sein. Besonders vorzugsweise entspricht die axiale Ausdehnung des Führungsteils / der Führungsteile wenigstens dem Abstand der axial am weitesten auseinanderliegenden Positionselemente 26 bzw. einem dem axialen Verfahrweg des Indikators 8.

Es ist sehr bevorzugt, dass der Buchsenkörper 2 eine Betätigungsausnehmung 18 umfasst. Die Betätigungsausnehmung 18 ist vorzugsweise in radialer Richtung durchgängig, so dass sie eine Verbindung zwischen einem Inneren und einem Äußeren des Buchsenkörpers 2 darstellt. Die Betätigungsausnehmung kann in einer Draufsicht auf den Buchsenkörper 2 umlaufend bzw. als Fenster ausgebildet sein. Es ist möglich, dass die Betätigungsausnehmung 18 sich bis zu einem axial auswärtigen Ende des Buchsenkörpers 2 und damit bis zu einer Kupplungsöffnung 24 des Buchsenkörpers 2 erstreckt, so dass die Betätigungsausnehmung 18 als Nut ausgestaltet ist.

Die Ausführungsform der Kupplungsbuchse 1 in Form eines VDA-Schnellverbinders umfasst vorzugsweise zwei in axialer Richtung aufeinanderfolgende Flansche im Bereich des Rückhalters 7. Es ist möglich, dass einer der Flansche, bevorzugt der axial auswärtigere Flansch, einen Anschlag 39 für den Indikator 8 bildet, worauf nachfolgend noch genauer eingegangen werden wird. Der Rückhalter 7 dieses Ausführungsbeispiels weist einen Handhabungsabschnitt 21 sowie vorzugsweise zwei Rastarme 22 auf. Es ist bevorzugt, dass der Handhabungsabschnitt 21 der U-Basis des Rückhalters 7 entspricht. Mit Vorteil stellen die beiden Rastarme 22 die U-Schenkel des U-förmigen Rückhalters 7 dar. Es ist möglich, dass die Enden der Rastarme 22, wie dies in Fig. 2 deutlich wird, sich in axialer Richtung erstrecken.

Die Ausdehnung der beiden Flansche in Umlaufrichtung entspricht bevorzugtermaßen in etwa der Ausdehnung in Umlaufrichtung des Handhabungsabschnittes 21. Zweckmäßigerweise ist der Handhabungsabschnitt 21 wenigstens abschnittsweise in axialer Richtung zwischen den beiden Flanschen angeordnet. Es ist möglich, dass der Handhabungsabschnitt 21 des Rückhalters 7 in einer Vorderansicht der Kupplungsbuchse 1 bzw. des Buchsenkörpers 2 einen in Radialrichtung erhöhten und vorzugsweise in der Mitte der U-Basis befindlichen Abschnitt aufweist. Der erhöhte Abschnitt mag insbesondere der Betätigung mittels einer Hand oder mittels eines Werkzeuges dienen. Die Rastarme 22 sind vorzugsweise in Rastarmfenstern 23 des Buchsenkörpers 2 befindlich, wenn der Rückhalter 7 sich in einer vollständig eingeschobenen Position innerhalb des Buchsenkörpers 2 befindet. Es ist möglich, dass der Buchsenkörper 2 eine nur teilweise eingeschobene Position des Rückhalters 7, beispielsweise durch entsprechende Rastaufnahmen oder Rastvorsprünge, definiert.

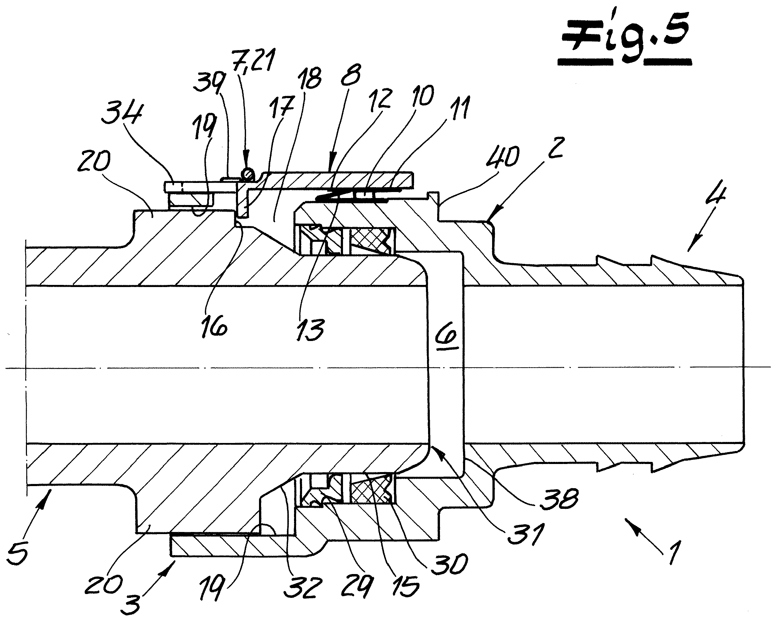

Wie aus einer Zusammenschau der Figuren 2 und 5 deutlich wird, umfasst die Kupplungsbuchse 1 vorzugsweise eine Dichtung 29, 30, welche bevorzugt einen Dichtungshalter 29 aufweist, welcher mit Vorteil einen Dichtungsring 30 in dem Buchsenkörper 2 fixiert. Zweckmäßigerweise begrenzt der Dichtungshalter 29 den Kupplungsabschnitt 3. Demgegenüber mag der Verbindungsabschnitt 4 als überlappender Abschnitt zwischen dem Buchsenkörper 2 und einem hier nicht dargestellten Rohr definiert sein. Der Kupplungsabschnitt 3 und der Verbindungsabschnitt 4 sind zweckmäßigerweise über einen Innenkanal 6 fluidisch miteinander verbunden und mögen in axialer Richtung einen Mittelabschnitt des Buchsenkörpers 2 einschließen. Mit Vorteil umfasst der Mittelabschnitt insbesondere den Dichtungshalter 29, den Dichtungsring 30 sowie eine Schulter 38 des Buchsenkörpers 2, s. Fig. 5.

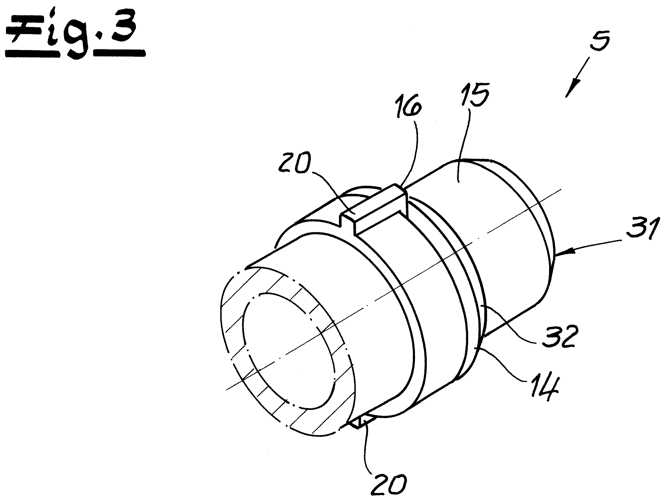

Der Kupplungsstecker 5 aus Fig. 3 umfasst vorzugsweise eine Steckeröffnung 31, deren Außenseite sich in axial einwärtiger Richtung bevorzugt gerundet aufweitet. In weiter axial einwärtiger Richtung umfasst der Kupplungsstecker 5 vorzugsweise eine Dichtfläche 15, eine Spreizfläche 32, ein Riegelelement 14 und/oder wenigstens ein Sicherungsteil 20. In diesem Ausführungsbeispiel umfasst der Kupplungsstecker 5 zwei Sicherungsteile 20, welche mit Vorteil in Umlaufrichtung diametral einander gegenüberliegen.

Es ist bevorzugt, dass die Spreizfläche 32 sich in axial einwärtiger Richtung - insbesondere konisch - aufweitet, so dass die Rastarme 22 des Rückhalters 7 bei Einführung des Kupplungssteckers 5 auseinandergespreizt werden und Rückstellenergie im Rückhalter 7 gespeichert wird. Wird der Kupplungsstecker 5 vollständig eingeschoben, so erreichen die Rastarme 22 das nutartige Riegelelement 14 und rasten darin ein. Vorzugsweise ist die Dichtfläche 15 zylindrisch ausgestaltet und zweckmäßigerweise so dimensioniert, dass sie einen fluiddichten Kraftschluss mit dem Dichtungsring 30 der Kupplungsbuchse 1 eingeht. Es ist besonders bevorzugt, dass der Kupplungsstecker 5 ein Betätigungselement 16 aufweist. In diesem Ausführungsbeispiel ist das Betätigungselement 16 als Stirnfläche von einem der beiden Sicherungsteile 20 ausgebildet. Die Sicherungsteile 20 sind bevorzugt als federartige Elemente ausgebildet, welche zweckmäßigerweise in die nutartigen Sicherungselemente 19 des Buchsenkörpers 2 eingreifen.

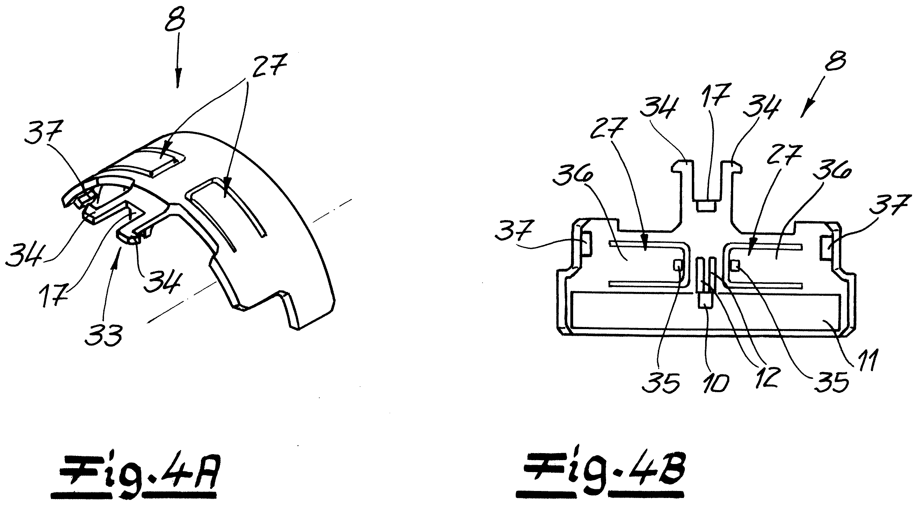

Der Indikator 8 dieses Ausführungsbeispiels umfasst gemäß Fig. 4A vorzugsweise einen Betätigungsabschnitt 17, welcher besonders bevorzugtermaßen mit dem Betätigungselement 16 des Kupplungssteckers wechselwirkt. Hierauf wird in den nachfolgenden Figuren 5 bis 7 noch detaillierter eingegangen. Mit Vorteil weist der Indikator 8 wenigstens ein Positionsteil 27 und vorzugsweise zwei Positionsteile 27 auf. Zweckmäßigerweise umfasst der Indikator 8 wenigstens ein Führungselement 37 und vorzugsweise wenigstens zwei Führungselemente 37. In Fig. 4A ist das zweite Führungselement 37 aufgrund der gewählten Perspektive nicht ersichtlich. Der Indikator 8 mag einen Stopper 33 aufweisen, welcher mit Vorteil wenigstens einen Stopperhaken 34 und vorzugsweise zwei Stopperhaken 34 umfasst.

Mit Blick auf Fig. 4B ist die Innenseite des Indikators 8 erkennbar. Demzufolge sind die Positionsteile 27 dieses Ausführungsbeispiels als federelastische Elemente ausgebildet. Vorzugsweise umfasst das wenigstens eine Positionsteil 27 einen Federarm 36, welcher zweckmäßigerweise durch einen teilweise umlaufenden, beispielsweise U-förmigen, Schlitz in einer Wand des Indikators 8 gebildet wird. Jedes Positionsteil 27 mag einen Vorsprung 35 aufweisen, welcher in diesem Ausführungsbeispiel nach radial innen ragt und mit den jeweiligen Positionselementen 26 aus Fig. 2 in Eingriff bringbar ist. In Fig. 4B ist auch das zweite Führungselement 37 erkennbar. Mit Vorteil sind beide Führungselemente 37 nach radial innen vorspringend, so dass diese in die komplementären Führungsteile 28 des Buchsenkörpers 2 aus Fig. 2 eingreifen können und auf diese Weise die axiale Beweglichkeit des Indikators 8 auf den Buchsenkörper 2 definieren.

Es ist besonders bevorzugt, dass der Indikator einen Chip 10, eine Antenne 11, und/oder wenigstens einen Schaltkontakt 12 umfasst. Die Elemente 10, 11, 12 dieses Ausführungsbeispiels sind gemeinsam mit dem Schließer 13 des Buchsenkörpers 2 Bestandteile eines Senders 9. Zweckmäßigerweise bilden der Chip 10, die Schaltkontakte 12 sowie der Schließer 13 einen Schaltkreis 10, 12, 13. Es ist sehr von Vorteil, dass der Chip 10 ein RFID-Chip ist, so dass es sich bei dem Sender 9 um einen RFID-Sender handelt. Der Chip 10 ist zweckmäßigerweise mit der Antenne 11 verbunden, welche in bekannter Weise auf RFID-Lesegeräte antwortet. Es ist sehr bevorzugt, dass der Chip 10 mit zwei Schaltkontakten 12 in Form von länglich ausgebildeten Kontaktstreifen elektrisch verbunden ist. Zweckmäßigerweise ist die Antenne 11 in einer axial einwärtigen Hälfte des Indikators 8 angeordnet. Es ist möglich, dass der Chip 10 in einer axial einwärtigen Hälfte des Indikators 8 befindlich ist. Es ist sehr bevorzugt, dass der Chip 10 ausgebildet ist, zu erkennen, ob die beiden Schaltkontakte 12 miteinander elektrisch verbunden sind oder nicht. Es ist ganz besonders bevorzugt, dass der Chip 10 ausgebildet ist, den Verbindungszustand zwischen den beiden Schaltkontakten 12 zu speichern und in einer Kommunikation mit einem Lesegerät preiszugeben.

In den Figuren 5 bis 7 ist der Verbindungsvorgang zwischen dem Kupplungsstecker 5 und der Kupplungsbuchse 1 dargestellt. So ist in Fig. 5 der Zeitpunkt des Verbindungsvorgangs abgebildet, bei welchem der Kupplungsstecker 5 erstmalig mit seinem Betätigungselement 16 den Betätigungsabschnitt 17 des Indikators 8 innerhalb der Betätigungsausnehmung 18 berührt. Zu diesem Zeitpunkt hat die Dichtfläche 15 bereits den Dichtungsring 30 erreicht und dadurch eine fluidisch dichte Verbindung zwischen dem Kupplungsstecker 5 und der Kupplungsbuchse 1 geschaffen. Allerdings hat das Riegelelement 14, welches in diesem Ausführungsbeispiel auf der Höhe des Betätigungselementes 16 befindlich ist, den Rückhalter 7 noch nicht erreicht. Dies ist insbesondere daran ersichtlich, dass das Betätigungselement 16 noch nicht auf der axialen Höhe wie der Handhabungsabschnitt 21 ist. Somit liegt bei dem in Fig. 5 gezeigten Zustand des Verbindungsvorgangs noch keine Verriegelung des Kupplungssteckers 5 in der Kupplungsbuchse 1 vor. Dieser Umstand ist auch daran zu erkennen, dass zwischen der Schulter 38 des Buchsenkörpers 2 und der Steckeröffnung 31 des Kupplungssteckers 5 noch ein etwas größerer Spalt befindlich ist.

Zu dem in Fig. 5 gezeigten Zeitpunkt des Verbindungsvorgangs sind der Schließer 13 und die beiden Schaltkontakte 12 noch miteinander elektrisch verbunden. Ein Lesegerät würde zu diesem Zeitpunkt folglich den Zustand "elektrisch verbunden" erfassen und daraus den Schluss ziehen, dass die Verriegelung des Kupplungssteckers 5 in der Kupplungsbuchse 1 noch nicht stattgefunden hat. Der Indikator 8 befindet sich in dem in Fig. 5 gezeigten Zustand in der am weitesten axial auswärts befindlichen Position relativ zum Buchsenkörper 2. Dies ist insbesondere an der Position der Stopperhaken 34 relativ zu dem Anschlag 39 in Form des axial weiter auswärts liegenden Flansches ersichtlich.

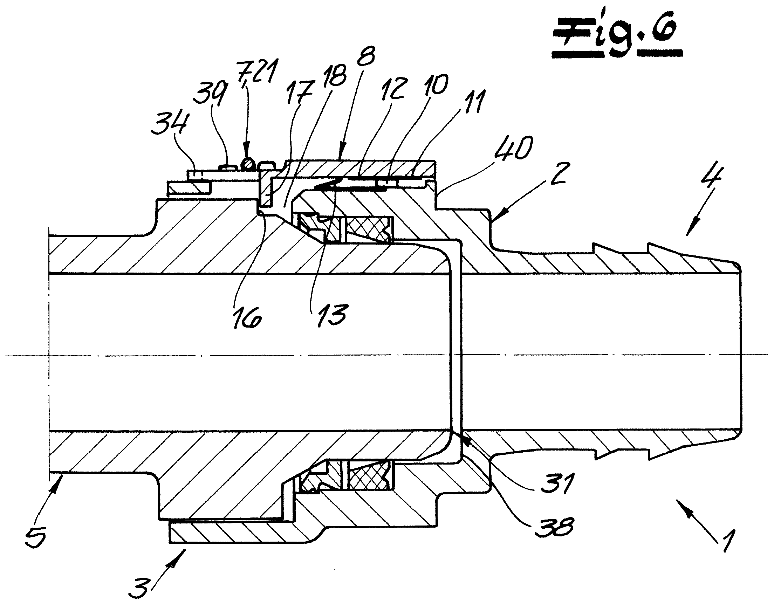

In Fig. 6 ist ein Verbindungszustand zwischen Kupplungsstecker 5 und Kupplungsbuchse 1 gezeigt, in welchem der Kupplungsstecker 5 verriegelt in dem Buchsenkörper 2 gehalten ist. Dies ist daran zu erkennen, dass sich das Betätigungselement 16 und damit das auf der gleichen Höhe befindliche Riegelelement 14 auf derselben axialen Höhe wie der Rückhalter 7 befinden. Außerdem ist der Abstand zwischen der Steckeröffnung 31 und der Schulter 38 deutlich kleiner geworden, so dass zwischen diesen beiden Elementen nur noch etwas Spiel verbleibt. Somit hat das Betätigungselement 16 den Betätigungsabschnitt 17 in axial einwärtiger Richtung relativ zum Buchsenkörper 2 innerhalb der Betätigungsausnehmung 18 verschoben.

In diesem Ausführungsbeispiel befinden sich in dem in Fig. 6 gezeigten Zustand die beiden Vorsprünge 35 der Positionsteile 27 des Indikators 8 nun in dem jeweils mittleren Positionselement 26 des Buchsenkörpers 2. Durch diese Bewegung wurden der Chip 10, die Antenne 11 und insbesondere die beiden Schaltkontakte 12 in axial einwärtiger Richtung relativ zum Schließer 13 verschoben, so dass die Schaltkontakte 12 und der Schließer 13 nicht mehr in einem elektrischen Kontakt zueinander stehen. Folglich wurde der Schaltkreis 10, 12, 13 geöffnet, wobei der Chip 10 diese elektrische Zustandsänderung bevorzugtermaßen registriert und abspeichert. Ein Lesegerät würde bei Auslesen des Chips 10 darauf schließen, dass der Kupplungsstecker 5 verriegelt in der Kupplungsbuchse 1 gehalten wird.

Außerdem ist mithilfe des Indikators 8 dieses Ausführungsbeispiels auch die optische Indikation des Verbindungszustandes möglich. So schließen die Stopperhaken 34 des Stoppers 33 des Indikators 8 in Fig. 5 am axial auswärtigen Ende der Kupplungsbuchse 1 etwa bündig mit dem Buchsenkörper 2 ab, was in Fig. 6 nicht mehr der Fall ist. Stattdessen schließt das axial einwärtige Ende des Indikators 8 in Fig. 6 etwa bündig mit einer Stufe 40 des Buchsenkörpers 2 ab.

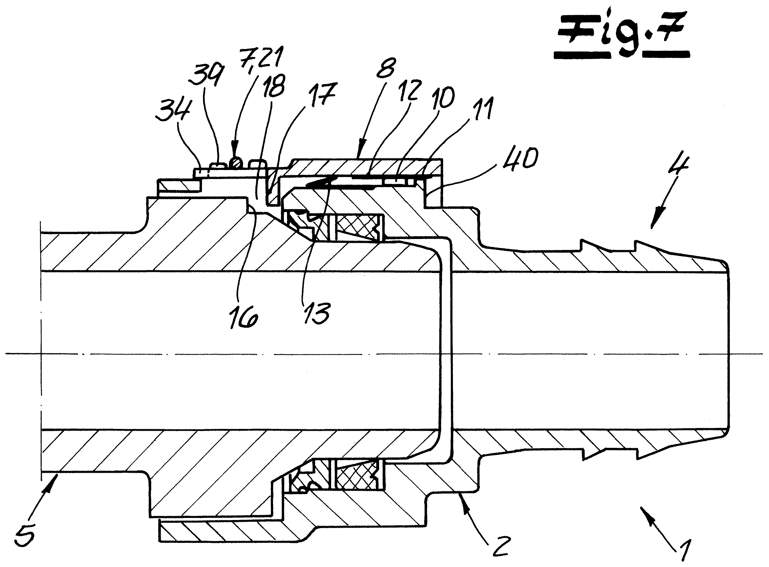

In Fig. 7 ist ein dritter Zustand des Indikators 8 gezeigt. Demzufolge befinden sich die Vorsprünge 35 des Indikators 8 nun in den am weitesten axial einwärts gelegenen Positionselementen 26 des Buchsenkörpers 2. Diese Position wird nicht über den nach wie vor fest verriegelten Kupplungsstecker 5, sondern über eine manuelle Betätigung des Indikators 8 erreicht. Hierdurch entsteht eine Lücke zwischen dem Betätigungselement 16 des Kupplungssteckers 5 und dem Betätigungsabschnitt 17 des Indikators 8 innerhalb der Betätigungsausnehmung 18. Stattdessen stößt in diesem Ausführungsbeispiel der Betätigungsabschnitt 17 nun an eine Stirnfläche der Betätigungsausnehmung 18 an.

Außerdem wurde in dem in Fig. 7 gezeigten Zustand der Abstand zwischen dem Schließer 13 und den beiden Schaltkontakten 12 noch weiter vergrößert, während die Stopperhaken 34 nun an dem Anschlag 39 bzw. an den Anschlägen 39 anschlagen, wodurch die axial am weitesten einwärtig gelegene Position des Indikators 8 markiert wird. Dieser Zustand ist auch in Fig. 1 abgebildet. In Fig. 7 ist ferner erkennbar, dass das axial einwärtige Ende des Indikators 8 nun in axial einwärtiger Richtung gegenüber der Stufe 40 des Buchsenkörpers 2 vorsteht.

Der Zweck des dritten, axial am weitesten einwärts gelegenen Positionselementes 26 liegt in einer haptischen Indikation des Verbindungszustandes. Denn während sich der Indikator 8 von der in Fig. 7 gezeigten Position in die in Fig. 6 gezeigte Position manuell bewegen lässt und damit haptisch spürbar ist, gilt dies nicht für eine weitere Überführung von der Position aus Fig. 6 in diejenige von Fig. 5. So merkt der Nutzer durch Verschieben des Indikators 8, dass er zwar zwischen den Positionen des Indikators 8 aus den Figuren 7 und 6 hin und her wechseln kann, was jedoch nicht für den Zustand aus Fig. 5 gilt. Der Nutzer kann also nicht den Indikator 8 soweit nach axial auswärts verschieben, dass die Stopperhaken 34 das axial auswärtige Ende und damit die Kupplungsöffnung 24 des Buchsenkörpers 2 erreichen. Aufgrund dieses Unterschiedes kann sich der Nutzer sicher sein, dass er nicht etwa zu wenig Kraft für das Verschieben des Indikators 8 aufgewendet hat. Stattdessen weiß er aufgrund der manuell möglichen Verschiebung zwischen den Positionen der Figuren 6 und 7, dass er sehr wohl ausreichend Kraft aufgewendet hat und dass ganz offensichtlich die Position des Indikators aus Fig. 5 aufgrund der Verriegelung des Kupplungssteckers 5 gewollt nicht mehr erreichbar ist. Die Kupplungsanordnung 1, 5 bietet im Ergebnis somit die optische, haptische als auch elektronische Indikation des Verbindungszustandes zwischen dem Kupplungsstecker 5 und der Kupplungsbuchse 1.Bezugszeichen:

| | | | |
|---|---|---|---|
| 1 | Kupplungsbuchse | 26 | Positionselement von 2 |
| 2 | Buchsenkörper | 27 | Positionsteil von 8 |
| 3 | Kupplungsabschnitt | 28 | Führungsteil von 2 für 8 |
| 4 | Verbindungsabschnitt | 29 | Dichtungshalter von 1 |
| 5 | Kupplungsstecker | 30 | Dichtungsring von 1 |
| 6 | Innenkanal | 31 | Steckeröffnung von 5 |
| 7 | Rückhalter | 32 | Spreizfläche von 5 |
| 8 | Indikator | 33 | Stopper von 8 |
| 9 | Sender | 34 | Stopperhaken von 8 |
| 10 | Chip | 35 | Vorsprung von 27 |
| 11 | Antenne | 36 | Federarm von 27 |
| 12 | Schaltkontakte | 37 | Führungselement von 8 |
| 13 | Schließer | 38 | Schulter von 2 |
| 14 | Riegelelement von 5 | 39 | Anschlag von 2 für 33 |
| 15 | Dichtfläche von 5 | 40 | Stufe von 2 |
| 16 | Betätigungselement von 5 | | |
| 17 | Betätigungsabschnitt von 8 | | |
| 18 | Betätigungsausnehmung von 2 | | |
| 19 | Sicherungselement von 2 | | |
| 20 | Sicherungsteil von 5 | | |
| 21 | Handhabungsabschnitt von 7 | | |
| 22 | Rastarm von 7 | | |
| 23 | Rastarmfenster von 2 | | |
| 24 | Kupplungsöffnung von2 | | |
| 25 | Schließeraufnahme | 10, 12 | Schaltkreis |
| | | 13 | |

## Patentansprüche

1. Kupplungsbuchse (1) zur automatisierten Erfassung des Kupplungszustandes, umfassend einen Buchsenkörper (2) mit einem Kupplungsabschnitt (3) und einem Verbindungsabschnitt (4), wobei der Kupplungsabschnitt (3) ausgebildet ist, um mit einem komplementären Kupplungsstecker (5) reversibel lösbar verbunden zu werden, wobei der Verbindungsabschnitt (4) ausgebildet ist, um mit einem Rohr oder Aggregat verbunden zu werden bzw. zu sein, wobei der Kupplungsabschnitt (3) und der Verbindungsabschnitt (4) über einen Innenkanal (6) fluidisch miteinander verbunden sind,
wobei die Kupplungsbuchse (1) einen Rückhalter (7) zum Verriegeln des Kupplungssteckers (5) in dem Buchsenkörper (2) umfasst, wobei der Rückhalter (7) beweglich am Buchsenkörper (2) gelagert ist, wobei die Kupplungsbuchse (1) einen Indikator (8) zur Indikation eines Verbindungszustandes zwischen der Kupplungsbuchse (1) und dem Kupplungsstecker (5) aufweist, wobei der Indikator (8) beweglich am Buchsenkörper (2) gelagert ist und über seine Position relativ zum Buchsenkörper (2) den Verbindungszustand anzeigt,
wobei die Kupplungsbuchse (1) einen Sender (9) zur Übertragung eines Sendesignals aufweist, wobei der Sender (9) so ausgebildet ist, dass das Sendesignal den Verbindungszustand übertragen kann, wobei der Sender (9) einen Chip (10), eine Antenne (11) sowie einen Schalter (12, 13) umfasst, wobei der Schalter (12, 13) wenigstens einen Schaltkontakt (12) sowie einen Schließer (13) aufweist, wobei der Chip (10), der wenigstens eine Schaltkontakt (12) und der Schließer (13) Bestandteile eines Schaltkreises (10, 12, 13) sind,
wobei der Schaltkreis (10, 12, 13) sich je nach Position des Schließers (13) relativ zu dem wenigstens einen Schaltkontakt (12) in einem geöffneten oder in einem geschlossenen Zustand befindet, wobei die Kupplungsbuchse (1) so ausgebildet ist, dass bei einem Einführen des Kupplungssteckers (5) in den Buchsenkörper (2) der Zustand des Schaltkreises (10, 12, 13) geändert wird,
wobei der Chip (10) und/oder die Antenne (11) und/oder der wenigstens eine Schaltkontakt (12) am Indikator (8) und/oder am Rückhalter (7) angeordnet ist/sind,
**dadurch gekennzeichnet, dass** der Sender (9) so ausgebildet ist, dass der geänderte Zustand im Chip (10) speicherbar und über das Sendesignal von einem Lesegerät abrufbar ist, wobei der Indikator (8) im nicht mit dem Kupplungsstecker (5) verbundenen Verbindungszustand der Kupplungsbuchse (1) axial beweglich am Buchsenkörper (2) gelagert ist.

2. Kupplungsbuchse (1) nach Anspruch 1, wobei der Rückhalter (7) und der Indikator (8) separat ausgebildete Teile sind und vorzugsweise unterschiedliche Bewegungsrichtungen beim Verschieben am Buchsenkörper (2) aufweisen.

3. Kupplungsbuchse nach einem der Ansprüche 1 oder 2, wobei der Schließer (13) beweglich und vorzugsweise federelastisch ausgebildet ist.

4. Kupplungsbuchse (1) nach einem der Ansprüche 1 bis 3, wobei der wenigstens eine Schaltkontakt (12) und/oder der Chip (10) und/oder die Antenne (11) auf einer dem Buchsenkörper (2) zugewandten Seite des Indikators (8) bzw. Rückhalters (7) angeordnet bzw. befestigt ist/sind.

5. Kupplungsbuchse (1) nach einem der Ansprüche 1 bis 4, wobei der Indikator (8) zu einem überwiegenden Teil auf einer Außenseite des Buchsenkörpers (2) angeordnet ist.

6. Kupplungsbuchse (1) nach einem der Ansprüche 1 bis 5, wobei der Indikator (8) wenigstens zwei und vorzugsweise wenigstens drei definierte Positionen relativ zum Buchsenkörper (2) einnehmen kann.

7. Kupplungsbuchse (1) nach einem der Ansprüche 1 bis 6, wobei der Indikator (8) einen Betätigungsabschnitt (17) umfasst, wobei die Kupplungsbuchse (1) bzw. der Indikator (8) vorzugsweise so ausgebildet ist/sind, dass der Kupplungsstecker (5) beim Einführen in den Buchsenkörper (2) den Betätigungsabschnitt (17) berührt.

8. Kupplungsbuchse (1) nach einem der Ansprüche 1 bis 7, wobei der Buchsenkörper (2) eine Betätigungsausnehmung (18), insbesondere in Form einer radial durch die Wand des Buchsenkörpers (2) durchgehenden Nut oder eines Fensters, umfasst, so dass bevorzugterweise der Betätigungsabschnitt (17) durch die Wand des Buchsenkörpers (2) hindurchragt.

9. Kupplungsbuchse (1) nach einem der Ansprüche 1 bis 8, wobei die Kupplungsbuchse (1) so ausgebildet ist, dass der Kupplungsstecker (5) bei einem Einführen in den Buchsenkörper (2) den Indikator (8) von einer axial auswärtigen Position in eine axial einwärtige Position überführt.

10. Kupplungsbuchse (1) nach einem der Ansprüche 1 bis 9, wobei der Buchsenkörper (2) wenigstens ein Sicherungselement (19) zur Verdrehsicherung des Kupplungssteckers (5) in dem Buchsenkörper (2) aufweist.

11. Kupplungsbuchse (1) nach einem der Ansprüche 1 bis 10, wobei der Rückhalter (7) eine im wesentlichen U-förmige Gestalt aufweist und vorzugsweise in radialer Richtung in den Buchsenkörper (2) einführbar ist.

12. Kupplungsbuchse (1) nach einem der Ansprüche 1 bis 11, wobei der Schalter (13, 13) zwei Schaltkontakte (12) umfasst.

13. Kupplungsbuchse (1) nach einem der Ansprüche 1 bis 12, wobei der Indikator (8) in wenigstens einer axialen Position und vorzugsweise in allen axialen Positionen den Schließer (13) wenigstens teilweise und bevorzugt vollständig verdeckt.

14. Verfahren zum Verbinden einer Kupplungsbuchse (1) nach einem der Ansprüche 1 bis 13 und eines in die Kupplungsbuchse (1) einsteckbaren Kupplungssteckers (5), wobei die Kupplungsbuchse (1) einen Buchsenkörper (2) mit einem Kupplungsabschnitt (3) und einem Verbindungsabschnitt (4) umfasst, wobei die Kupplungsbuchse (1) ausgebildet ist, um mit dem Kupplungsstecker (5) reversibel lösbar verbunden zu werden, wobei der Verbindungsabschnitt (4) ausgebildet ist, um mit einem Rohr oder Aggregat verbunden zu werden oder verbunden zu sein, wobei der Kupplungsabschnitt (3) und der Verbindungsabschnitt (4) über einen Innenkanal (6) fluidisch miteinander verbunden sind,
wobei die Kupplungsbuchse (1) einen Rückhalter (7) zum Verriegeln des Kupplungssteckers (5) in dem Buchsenkörper (2) umfasst, wobei der Rückhalter (7) beweglich am Buchsenkörper (2) gelagert ist, wobei die Kupplungsbuchse (1) einen Indikator (8) zur Indikation eines Verbindungszustandes zwischen dem Kupplungsstecker (5) und der Kupplungsbuchse (1) aufweist, wobei der Indikator (8) beweglich am Buchsenkörper (2) gelagert ist und über seine Position relativ zum Buchsenkörper (2) den Verbindungszustand anzeigt, wobei der Indikator (8) an einer Außenseite des Buchsenkörpers (2) angeordnet ist,
wobei die Kupplungsbuchse (1) einen Sender (9) zur Übertragung eines Sendesignals aufweist, wobei der Sender (9) so ausgebildet ist, dass das Sendesignal den Verbindungszustand übertragen kann, wobei der Sender (9) einen Chip (10), eine Antenne (11) sowie einen Schalter (12, 13) umfasst, wobei der Schalter (12, 13) wenigstens einen Schaltkontakt (12) sowie einen Schließer (13) aufweist, wobei der Chip (10), der wenigstens eine Schaltkontakt (12) und der Schließer (13) Bestandteile eines Schaltkreises (10, 12, 13) sind, wobei der Schaltkreis (10, 12, 13) sich je nach Position des Schließers (13) relativ zu dem wenigstens einen Schaltkontakt (12) in einem geöffneten oder in einem geschlossenen Zustand befindet, wobei die Kupplungsbuchse (1) so ausgebildet ist, dass bei einem Einführen des Kupplungssteckers (5) in den Buchsenkörper (2) der Zustand des Schaltkreises (10, 12, 13) geändert wird,
**dadurch gekennzeichnet, dass**
der Sender (9) so ausgebildet ist, dass der geänderte Zustand im Chip (10) speicherbar und über das Sendesignal von einem Lesegerät abrufbar ist, wobei die Kupplungsbuchse (1) und der Kupplungsstecker (5) so ausgebildet sind, dass beim Einführen des Kupplungssteckers (5) in den Buchsenkörper (2) ein Betätigungselement (16) des Kupplungssteckers (5) an einem Betätigungsabschnitt (17) des Indikators (8) anschlägt, so dass der Indikator (8) bei einem weiteren Einführen des Kupplungssteckers (5) nach axial einwärts relativ zum Buchsenkörper (2) verschoben wird.

## Claims

1. Coupling socket (1) for automated detection of the coupling state, comprising a socket body (2) having a coupling portion (3) and a connecting portion (4), wherein the coupling portion (3) is designed to be reversibly detachably connected to a complementary coupling plug (5), wherein the connecting portion (4) is designed to be connected to a pipe or unit, wherein the coupling portion (3) and the connecting portion (4) are fluidically connected to one another via an internal channel (6),
wherein the coupling socket (1) comprises a retainer (7) for locking the coupling plug (5) in the socket body (2), wherein the retainer (7) is movably mounted on the socket body (2), wherein the coupling socket (1) has an indicator (8) for indicating a connection state between the coupling socket (1) and the coupling plug (5), wherein the indicator (8) is movably mounted on the socket body (2) and indicates the connection state via its position relative to the socket body (2),
wherein the coupling socket (1) has a transmitter (9) for transmitting a transmission signal, wherein the transmitter (9) is designed such that the transmission signal can transmit the connection state, wherein the transmitter (9) comprises a chip (10), an antenna (11) and a switch (12, 13), wherein the switch (12, 13) has at least one switching contact (12) and a normally open contact (13), wherein the chip (10), the at least one switching contact (12) and the normally open contact (13) are components of a circuit (10, 12, 13),
wherein the circuit (10, 12, 13) is in an open or a closed state depending on the position of the normally open contact (13) relative to the at least one switching contact (12), wherein the coupling socket (1) is designed such that when the coupling plug (5) is inserted into the socket body (2), the state of the circuit (10, 12, 13) is changed,
wherein the chip (10) and/or the antenna (11) and/or the at least one switching contact (12) is/are arranged on the indicator (8) and/or on the retainer (7),
**characterized in that**
the transmitter (9) is designed such that the changed state can be stored in the chip (10) and retrieved by a reader via the transmission signal, wherein the indicator (8) is mounted axially movably on the socket body (2) when the coupling socket (1) is not connected to the coupling plug (5).

2. Coupling socket (1) according to claim 1, wherein the retainer (7) and the indicator (8) are separately formed parts and preferably have different directions of movement when displaced on the socket body (2).

3. Coupling socket according to one of claims 1 or 2, wherein the normally open contact (13) is movable and preferably resilient.

4. Coupling socket (1) according to any of claims 1 to 3, wherein the at least one switching contact (12) and/or the chip (10) and/or the antenna (11) is/are arranged or fastened on a side of the indicator (8) or retainer (7) that faces the socket body (2).

5. Coupling socket (1) according to any of claims 1 to 4, wherein the indicator (8) is arranged predominantly on an outer side of the socket body (2).

6. Coupling socket (1) according to any of claims 1 to 5, wherein the indicator (8) can assume at least two and preferably at least three defined positions relative to the socket body (2).

7. Coupling socket (1) according to any of claims 1 to 6, wherein the indicator (8) comprises an actuating portion (17), wherein the coupling socket (1) or the indicator (8) is/are preferably designed such that the coupling plug (5) touches the actuating portion (17) upon insertion into the socket body (2).

8. Coupling socket (1) according to any of claims 1 to 7, wherein the socket body (2) comprises an actuating recess (18), in particular in the form of a groove or a window extending radially through the wall of the socket body (2), so that the actuating portion (17) preferably projects through the wall of the socket body (2).

9. Coupling socket (1) according to any of claims 1 to 8, wherein the coupling socket (1) is designed such that the coupling plug (5) transfers the indicator (8) from an axially outward position to an axially inward position when inserted into the socket body (2).

10. Coupling socket (1) according to any of claims 1 to 9, wherein the socket body (2) has at least one securing element (19) for preventing rotation of the coupling plug (5) in the socket body (2).

11. Coupling socket (1) according to any of claims 1 to 10, wherein the retainer (7) has a substantially U-shaped configuration and can preferably be inserted into the socket body (2) in the radial direction.

12. Coupling socket (1) according to any of claims 1 to 11, wherein the switch (13, 13) comprises two switching contacts (12).

13. Coupling socket (1) according to any of claims 1 to 12, wherein the indicator (8) at least partly and preferably completely covers the normally open contact (13) in at least one axial position and preferably in all axial positions.

14. Method for connecting a coupling socket (1) according to any of claims 1 to 13 and a coupling plug (5) which can be inserted into the coupling socket (1),wherein the coupling socket (1) comprises a socket body (2) having a coupling portion (3) and a connecting portion (4), wherein the coupling socket (1) is designed to be reversibly detachably connected to the coupling plug (5), wherein the connecting portion (4) is designed to be connected to a pipe or unit, wherein the coupling portion (3) and the connecting portion (4) are fluidically connected to one another via an internal channel (6),
wherein the coupling socket (1) comprises a retainer (7) for locking the coupling plug (5) in the socket body (2), wherein the retainer (7) is movably mounted on the socket body (2), wherein the coupling socket (1) has an indicator (8) for indicating a connection state between the coupling plug (5) and the coupling socket (1), wherein the indicator (8) is movably mounted on the socket body (2) and indicates the connection state via its position relative to the socket body (2), wherein the indicator (8) is arranged on an outer side of the socket body (2),
wherein the coupling socket (1) has a transmitter (9) for transmitting a transmission signal, wherein the transmitter (9) is designed such that the transmission signal can transmit the connection state, wherein the transmitter (9) comprises a chip (10), an antenna (11) and a switch (12, 13), wherein the switch (12, 13) has at least one switching contact (12) and a normally open contact (13), wherein the chip (10), the at least one switching contact (12) and the normally open contact (13) are components of a circuit (10, 12, 13), wherein the circuit (10, 12, 13) is in an open or a closed state depending on the position of the normally open contact (13) relative to the at least one switching contact (12), wherein the coupling socket (1) is designed such that when the coupling plug (5) is inserted into the socket body (2), the state of the circuit (10, 12, 13) is changed,
**characterized in that**
the transmitter (9) is designed such that the changed state can be stored in the chip (10) and retrieved by a reader via the transmission signal, wherein the coupling socket (1) and the coupling plug (5) are designed such that when the coupling plug (5) is inserted into the socket body (2), an actuating element (16) of the coupling plug (5) strikes an actuating portion (17) of the indicator (8), so that the indicator (8) is displaced axially inward relative to the socket body (2) when the coupling plug (5) is inserted further.

## Revendications

1. Douille d'accouplement (1) permettant la détection automatisée de l'état d'accouplement, comprenant un corps de douille (2) comportant une section d'accouplement (3) et une section de liaison (4), dans laquelle la section d'accouplement (3) est conçue pour être reliée de manière réversible et amovible à une fiche d'accouplement (5) complémentaire, dans laquelle la section de liaison (4) est conçue pour être reliée à un tuyau ou à un bloc, dans laquelle la section d'accouplement (3) et la section de liaison (4) sont connectées fluidiquement l'une à l'autre par l'intermédiaire d'un canal interne (6),
dans laquelle la douille d'accouplement (1) comprend un dispositif de retenue (7) permettant de verrouiller la fiche d'accouplement (5) dans le corps de douille (2), dans laquelle le dispositif de retenue (7) est monté mobile sur le corps de douille (2), dans laquelle la douille d'accouplement (1) présente un indicateur (8) permettant d'indiquer un état de liaison entre la douille d'accouplement (1) et la fiche d'accouplement (5), dans laquelle l'indicateur (8) est monté de manière mobile sur le corps de douille (2) et indique l'état de liaison par sa position par rapport au corps de douille (2),
dans laquelle la douille d'accouplement (1) présente un émetteur (9) permettant de transmettre un signal d'émission, dans laquelle l'émetteur (9) est conçu en sorte que le signal d'émission peut transmettre l'état de liaison, dans laquelle l'émetteur (9) comprend une puce (10), une antenne (11) ainsi qu'un commutateur (12, 13), dans laquelle le commutateur (12, 13) présente au moins un contact de commutation (12) ainsi qu'un contact à fermeture (13), dans laquelle la puce (10), l'au moins un contact de commutation (12) et le contact à fermeture (13) sont des composants d'un circuit (10, 12, 13),
dans laquelle le circuit de commutation (10, 12, 13) se trouve dans un état ouvert ou dans un état fermé selon la position du contact à fermeture (13) par rapport à l'au moins un contact de commutation (12), dans laquelle la douille d'accouplement (1) est conçue en sorte que, lors de l'insertion de la fiche d'accouplement (5) dans le corps de douille (2), l'état du circuit de commutation (10, 12, 13) est modifié,
dans laquelle la puce (10) et/ou l'antenne (11) et/ou l'au moins un contact de commutation (12) est/sont disposé(e·s) sur l'indicateur (8) et/ou sur le dispositif de retenue (7),
**caractérisée en ce que**
l'émetteur (9) est conçu en sorte que l'état modifié peut être mémorisé dans la puce (10) et peut être consulté par un appareil de lecture par l'intermédiaire du signal d'émission, dans laquelle l'indicateur (8) est monté mobile axialement sur le corps de douille (2) dans l'état de liaison, non relié à la fiche d'accouplement (5), de la douille d'accouplement (1).

2. Douille d'accouplement (1) selon la revendication 1, dans laquelle le dispositif de retenue (7) et l'indicateur (8) sont des pièces formées séparément et présentent de préférence des directions de déplacement différentes lors du déplacement sur le corps de douille (2).

3. Douille d'accouplement selon l'une des revendications 1 ou 2, dans laquelle le contact à fermeture (13) est mobile et de préférence élastique.

4. Douille d'accouplement (1) selon l'une des revendications 1 à 3, dans laquelle l'au moins un contact de commutation (12) et/ou la puce (10) et/ou l'antenne (11) est/sont disposé(e·s) ou fixé(e·s) sur un côté de l'indicateur (8) ou du dispositif de retenue (7), lequel côté est tourné vers le corps de douille (2).

5. Douille d'accouplement (1) selon l'une des revendications 1 à 4, dans laquelle l'indicateur (8) est disposé dans une partie prépondérante sur un côté extérieur du corps de douille (2).

6. Douille d'accouplement (1) selon l'une des revendications 1 à 5, dans laquelle l'indicateur (8) peut prendre au moins deux et de préférence au moins trois positions définies par rapport au corps de douille (2).

7. Douille d'accouplement (1) selon l'une des revendications 1 à 6, dans laquelle l'indicateur (8) comprend une section d'actionnement (17), dans laquelle la douille d'accouplement (1) ou l'indicateur (8) est/sont de préférence conçu(e·s) en sorte que la fiche d'accouplement (5) touche la section d'actionnement (17) lors de son insertion dans le corps de douille (2).

8. Douille d'accouplement (1) selon l'une des revendications 1 à 7, dans laquelle le corps de douille (2) comprend un évidement d'actionnement (18), en particulier sous la forme d'une rainure ou d'une fenêtre traversant radialement la paroi du corps de douille (2), en sorte que, de préférence, la section d'actionnement (17) fait saillie à travers la paroi du corps de douille (2).

9. Douille d'accouplement (1) selon l'une des revendications 1 à 8, dans laquelle la douille d'accouplement (1) est conçue en sorte que la fiche d'accouplement (5), lorsqu'elle est insérée dans le corps de douille (2), fait passer l'indicateur (8) d'une position axialement extérieure à une position axialement intérieure.

10. Douille d'accouplement (1) selon l'une des revendications 1 à 9, dans laquelle le corps de douille (2) présente au moins un élément de blocage (19) permettant de bloquer en rotation la fiche d'accouplement (5) dans le corps de douille (2).

11. Douille d'accouplement (1) selon l'une des revendications 1 à 10, dans laquelle le dispositif de retenue (7) présente une forme sensiblement en U et peut être inséré dans le corps de douille (2), de préférence dans la direction radiale.

12. Douille d'accouplement (1) selon l'une des revendications 1 à 11, dans laquelle le commutateur (13, 13) comprend deux contacts de commutation (12).

13. Douille d'accouplement (1) selon l'une des revendications 1 à 12, dans laquelle l'indicateur (8) recouvre au moins partiellement et de préférence complètement le contact à fermeture (13) dans au moins une position axiale et de préférence dans toutes les positions axiales.

14. Procédé permettant la liaison d'une douille d'accouplement (1) selon l'une des revendications 1 à 13 et d'une fiche d'accouplement (5) pouvant être insérée dans la douille d'accouplement (1), dans lequel la douille d'accouplement (1) comprend un corps de douille (2) comportant une section d'accouplement (3) et une section de liaison (4), dans lequel la douille d'accouplement (1) est conçue pour être reliée de manière réversible et détachable à la fiche d'accouplement (5), dans lequel la section de liaison (4) est conçue pour être reliée à un tuyau ou à un bloc, dans lequel la section d'accouplement (3) et la section de liaison (4) sont reliées fluidiquement l'une à l'autre par l'intermédiaire d'un canal interne (6),
dans lequel la douille d'accouplement (1) comprend un dispositif de retenue (7) permettant de verrouiller la fiche d'accouplement (5) dans le corps de douille (2), dans lequel le dispositif de retenue (7) est monté mobile sur le corps de douille (2), dans lequel la douille d'accouplement (1) présente un indicateur (8) permettant d'indiquer un état de liaison entre la fiche d'accouplement (5) et la douille d'accouplement (1), dans lequel l'indicateur (8) est monté mobile sur le corps de douille (2) et indique l'état de liaison par sa position par rapport au corps de douille (2), dans lequel l'indicateur (8) est disposé sur un côté extérieur du corps de douille (2),
dans lequel la douille d'accouplement (1) présente un émetteur (9) permettant de transmettre un signal d'émission, dans lequel l'émetteur (9) est conçu en sorte que le signal d'émission peut transmettre l'état de liaison, dans lequel l'émetteur (9) comprend une puce (10), une antenne (11) ainsi qu'un commutateur (12, 13), dans lequel le commutateur (12, 13) présente au moins un contact de commutation (12) ainsi qu'un contact à fermeture (13), dans lequel la puce (10), l'au moins un contact de commutation (12) et le contact à fermeture (13) sont des composants d'un circuit de commutation (10, 12, 13), dans lequel le circuit de commutation (10, 12, 13) se trouve dans un état ouvert ou dans un état fermé selon la position du contact à fermeture (13) par rapport à l'au moins un contact de commutation (12), dans lequel la douille d'accouplement (1) est conçue en sorte que l'état du circuit de commutation (10, 12, 13) est modifié lors d'une insertion de la fiche d'accouplement (5) dans le corps de douille (2),
**caractérisée en ce que**
l'émetteur (9) est conçu en sorte que l'état modifié peut être mémorisé dans la puce (10) et peut être consulté par un appareil de lecture par l'intermédiaire du signal d'émission, dans lequel la douille d'accouplement (1) et la fiche d'accouplement (5) sont conçues en sorte que, lors de l'insertion de la fiche d'accouplement (5) dans le corps de douille (2), un élément d'actionnement (16) de la fiche d'accouplement (5) vient buter contre une section d'actionnement (17) de l'indicateur (8), en sorte que l'indicateur (8) est déplacé axialement vers l'intérieur par rapport au corps de douille (2) lors d'une autre insertion de la fiche d'accouplement (5).
